# EUROPEAN PATENT APPLICATION

(11) **EP 4 506 813 A1**
(43) Date of publication of application: **12.02.2025**
(21) Application number: 22939526.4
(22) Date of filing: 27.05.2022
(51) Int. Cl.: G06F 9/4401

(54) **SYSTEM SLEEP METHOD AND APPARATUS AND SYSTEM WAKE-UP METHOD AND APPARATUS**

(30) Priority: 29.04.2022 CN 202210466672
(71) Applicant: Huawei Technologies Co., Ltd., Shenzhen, Guangdong 518129 (CN)
(72) Inventor: PENG, Yu, Shenzhen, Guangdong 518129 (CN); WEN, Congyang, Shenzhen, Guangdong 518129 (CN); DENG, Kai, Shenzhen, Guangdong 518129 (CN); ZHUANG, Zeliang, Shenzhen, Guangdong 518129 (CN)
(74) Representative: Gill Jennings & Every LLP
(86) International application number: PCT/CN2022/095695
(87) International publication number: WO 2023/206693

(57) **Abstract**

Embodiments of this application provide a system dormancy method and apparatus, and a system wake-up method and apparatus, and relate to the field of operating system technologies. In the method, a task in a blocked state does not need to be frozen, so that a quantity of tasks to be frozen or unfrozen can be reduced. In addition, device status information can be maintained during system operation, so that a quantity of devices to be put into dormancy or woken up can be reduced during system dormancy or wake-up. This increases a system dormancy or wake-up speed, reduces response duration for system dormancy or wake-up, improves user experience, and increases standby duration.

## Description

This application claims priority to Chinese Patent Application No. 202210466672.6, filed with the China National Intellectual Property Administration on April 29, 2022 and entitled "SYSTEM DORMANCY METHOD AND APPARATUS, AND SYSTEM WAKE-UP METHOD AND APPARATUS", which is incorporated herein by reference in its entirety.

### TECHNICAL FIELD

Embodiments of this application relate to the field of operating system technologies, and in particular, to a system dormancy method and apparatus, and a system wake-up method and apparatus.

### BACKGROUND

In the art, an electronic device may control, based on different states of a power supply, an operating system to enter a dormant state when the operating system does not need to operate, to reduce system power consumption. When a wake-up interrupt occurs, the electronic device may wake up the operating system of the device from the dormant state to resume a running state (also referred to as an awake state), so that the system resumes operation.

Currently, system dormancy and wake-up processes take a long time, and system dormancy and wake-up speeds are low. Consequently, response time for dormancy and wake-up (for example, screen-on and screen-off) of the electronic device is long, affecting user experience, and shortening standby duration of the system.

### SUMMARY

To resolve the foregoing technical problems, this application provides a system dormancy method and apparatus, and a system wake-up method and apparatus. In the method, a quantity of tasks to be frozen or unfrozen and a quantity of devices to be put into dormancy or woken up can be reduced, to increase a system dormancy or wake-up speed, reduce response duration for system dormancy or wake-up, improve user experience, and increase standby duration.

In a possible implementation, this application provides a system dormancy method. The method includes: in response to receiving a system dormancy request, filtering out a first task in a blocked state; freezing a filtered second task that is not in a blocked state; and putting a first device of a first type into dormancy based on device status information, where the device status information includes a device status of at least one device of the first type, the device status is information indicating whether the device is in a running state, the first device is different from a second device, and the second device is a device that is not in a running state in the at least one device.

For example, the second task is a task obtained by filtering out the first task, and the second task is not in a blocked state (this may also be described as being in a non-blocked state).

For example, the second task may be a task remaining after the first task in the blocked state is filtered out from all (or some) tasks in an operating system. For example, a to-be-frozen task may be selected by traversing tasks.

For example, in this implementation, even if a task status of a task that is in a blocked state and that is filtered out is switched to a running state before the first device is put into dormancy, because the second task that is not in a blocked state may be frozen, the task in the blocked state may still be frozen after being woken up, to ensure reliability of system dormancy.

For example, the device of the first type represents a device that does not affect operation of a CPU. The device of the first type may be a peripheral device (a peripheral for short).

For example, a preset device list may be configured for the device of the first type.

For example, putting a device into dormancy may be stopping operation of the device, or shutting down or powering off the device.

For example, the device status information may be generated during system operation based on whether the at least one device is in a running state. In this application, whether at least one peripheral device is in a running state may be detected during system operation, so that a device status of the peripheral device can be maintained during system operation.

For example, the device status may include a first state or a second state. The first state indicates that the device is in a running state (for example, in a started state or a powered-on state). For example, that the device is in a running state is also referred to as that the device is in an awake state. The second state indicates that the device is not in a running state (for example, in a shut-down state, a stopped state, or a powered-off state). For example, that the device is not in a running state is also referred to as that the device is in a dormant state.

For example, after a task is frozen and before a peripheral is put into dormancy, device status information generated and maintained by the system may include device status information of all peripherals, or include device status information of some peripherals.

Therefore, in this embodiment, during peripheral dormancy, the second device that is not in a running state (also referred to as being dormant) and that is recorded in the device status information does not need to be put into dormancy, and only a peripheral (the first device mentioned above) other than the second device in peripherals of the system needs to be put into dormancy, so that the peripheral other than the second device can be stopped from operation, to put the peripheral into dormancy. In the system dormancy process, a quantity of peripherals to be put into dormancy is reduced, and a speed of putting a peripheral into dormancy is increased.

For example, the device status information is data dynamically generated during system operation based on whether a detected peripheral is in a running state. Therefore, the device status information may include device status information of only some peripherals. In this embodiment, the peripheral (namely, the first device) whose system is put into dormancy may be a peripheral recorded in the device status information, or may be a peripheral that is not recorded in the device status information. This is not limited in this application.

For example, a data structure of the device status information may be a linked list. The linked list may be one linked list for recording all peripherals and identifying a device status of a detected peripheral. Alternatively, the linked list may be two linked lists, where one linked list records a peripheral in a running state, and the other linked list records a peripheral that is not in a running state. This is not limited in this application.

In this embodiment of this application, during system dormancy, a task may be frozen, and then a device is put into dormancy. During task freezing, a task in a blocked state may not be frozen, so that a quantity of tasks to be frozen is reduced, and a task freezing speed is increased. In addition, during device dormancy, a quantity of devices to be put into dormancy may be reduced based on device status information maintained during system operation, to accelerate a device dormancy process. In this way, an overall system dormancy speed can be increased, and duration of the system dormancy process can be shortened. This can shorten response time for system dormancy (for example, screen-off) for an electronic device on which the system is installed, and improve user experience. In addition, after the system dormancy process is accelerated, the system can enter a dormant state more quickly, to reduce system power consumption and improve standby duration of the system.

In a possible implementation, before the filtering out a first task in a blocked state, the method further includes: when it is detected that the system dormancy request is a preset dormancy request, increasing an operating frequency of a CPU to a first frequency, where the first frequency is a maximum operating frequency of the CPU.

For example, when the CPU of the system is a multi-core CPU, the CPU whose frequency is increased herein may be a primary-core CPU and/or a secondary-core CPU.

For example, the preset dormancy request is a dormancy request related to user experience.

In this embodiment, when the system dormancy request is the preset dormancy request, the operating frequency of the CPU may be increased to the maximum operating frequency to increase an instruction execution speed of the CPU. In this case, when the foregoing system dormancy-related operations are performed in response to the system dormancy request, the overall system dormancy process may be accelerated (for example, a task freezing process and a device dormancy process may be accelerated), to improve user experience to a maximum extent.

In a possible implementation, before the filtering out a first task in a blocked state, the method further includes: when it is detected that the system dormancy request is not the preset dormancy request, increasing the operating frequency of the CPU to a second frequency, where the second frequency is less than the first frequency, and the CPU achieves a highest energy efficiency ratio when the operating frequency of the CPU is the second frequency.

For example, the second frequency may be named as an operating frequency with an optimal energy efficiency ratio for the CPU.

For example, that the CPU achieves a highest energy efficiency ratio when the operating frequency of the CPU is the second frequency may be understood as follows: When the CPU performs a same quantity of instruction execution tasks at different operating frequencies, the CPU has lowest power consumption when the operating frequency of the CPU is the second frequency.

For example, when the CPU of the system is a multi-core CPU, the CPU whose frequency is increased herein may be a primary-core CPU and/or a secondary-core CPU.

For example, the operating frequency a with the optimal energy efficiency ratio may indicate that the CPU has a highest energy efficiency ratio and lowest power consumption when the operating frequency of the CPU is the operating frequency a.

In this embodiment, when the system dormancy request is not the preset dormancy request, it indicates that the system dormancy request is not related to user experience, and the user does not care about a speed of the system dormancy process. In this case, to reduce power consumption of the CPU, the operating frequency of the CPU may be adjusted to the operating frequency with the optimal energy efficiency ratio, to reduce system power consumption to a maximum extent.

It can be understood that this application provides a frequency adjustment policy for a CPU in a system dormancy or wake-up scenario. The frequency adjustment policy includes: when a system dormancy request or a system wake-up request is a preset request, increasing a frequency of the CPU to a maximum operating frequency; or when a system dormancy request or a system wake-up request is not a preset request, increasing a frequency of the CPU to an operating frequency with an optimal energy efficiency ratio.

In a possible implementation, the filtering out a first task in a blocked state includes: filtering out the first task in the blocked state from a task of a second type, where the task of the second type is a task other than a system task in an operating system.

For example, in a microkernel architecture, tasks in a system may include a user-mode task and a kernel-mode task.

The user-mode task may include a common task and a system service task (also a system task). All kernel-mode tasks are system tasks.

In this embodiment, during task freezing, system tasks (including a system service task in a user mode and a system task in a kernel mode) do not need to be frozen, and only a task that is not in a blocked state in common tasks needs to be frozen. There are many system tasks, and the system tasks do not need to be frozen. This can greatly increase a task freezing speed, to shorten system dormancy duration.

In a possible implementation, after the receiving a system dormancy request, the method further includes: sending a freezing signal to the task of the second type, where the freezing signal indicates to freeze the task.

For example, after the system dormancy request is received, in this embodiment of this application, freezing signals may be sent to all common tasks, where the common tasks herein include a common task in a blocked state. In this case, although a task in a blocked state does not need to be frozen, a freezing signal may still be sent to the task in the blocked state. In this case, even if the task in the blocked state is in a non-blocked state before a peripheral is put into dormancy, the task may still process the freezing signal, to freeze the task that is no longer in the blocked state. This ensures that a task in a blocked state can still be frozen after being recovered, and improves reliability of system dormancy.

In a possible implementation, after the filtering out a first task in a blocked state, and before the putting a first device of a first type into dormancy based on device status information, the method further includes: storing, to a first data structure, a third task that is not in a frozen state in the second task; cyclically traversing the third task in the first data structure, and detecting a task status of the traversed third task; and when it is detected in the first data structure that the task status of the third task is the frozen state, deleting the third task in the frozen state from the first data structure; or when it is detected in the first data structure that the task status of the third task is not the frozen state, continuing to cyclically traverse the first data structure until the first data structure is empty.

For example, the second task includes the third task.

For example, after the freezing signal is sent to the task of the second type, a task that is not in a blocked state (namely, the second task) in the task of the second type may process the freezing signal to freeze the task. To determine whether each second task is frozen and is in a frozen state, in this application, a task status of the second task may be detected, to store a third task that is not frozen (in an unfrozen state) to the first data structure.

Then tasks in the first data structure may be cyclically traversed to detect a task status, to delete a task in a frozen state from the first data structure. In this case, with freezing progress of tasks in a non-blocked state (for example, the second task), a quantity of tasks in the first data structure is decreasing. The first data structure stores only unfrozen tasks. This avoids redundant check on task statuses of a large quantity of frozen tasks, improves efficiency of traversing unfrozen tasks, and therefore accelerates a task freezing process. When the first data structure is empty, the first data structure no longer includes any task. This indicates that all tasks in a non-blocked state are frozen, and the task freezing process ends.

For example, third tasks in the first data structure may be cyclically traversed within preset duration, to avoid a case that the third tasks in the first data structure remain unfrozen for a long time, and avoid impact on a system dormancy speed.

In a possible implementation, the CPU of the system is a multi-core CPU, the multi-core CPU includes a primary-core CPU and at least one secondary-core CPU, and after the putting a first device of a first type into dormancy based on device status information, the method further includes: before a first secondary-core CPU is powered off, retaining a timer and a task on the first secondary-core CPU without migrating the timer or the task to a second CPU, where the second CPU is a second secondary-core CPU or the primary-core CPU, and the at least one secondary-core CPU includes the first secondary-core CPU, or further includes the second secondary-core CPU.

In this way, a task running on the secondary-core CPU among tasks in a blocked state that are filtered out is not migrated to another running CPU. In this case, after the secondary-core CPU is deactivated, a task in a blocked state on the secondary-core CPU is not performed even if the task is updated from the blocked state to a non-blocked state. This ensures that, before a non-core device (also referred to as a peripheral) is put into dormancy, even if a task status of a task in a blocked state is updated to a non-blocked state, the task is still frozen based on a received freezing signal, and cannot run.

For example, a task of a timer on the secondary-core CPU is in a blocked state, and is added to a blocked task linked list. After timing of the timer ends, a task corresponding to the timer may send an interrupt to the secondary-core CPU. However, because the secondary-core CPU is deactivated and the task corresponding to the timer is not migrated to another running CPU, after entering a kernel, the system no longer receives an interrupt initiated by the task on the deactivated secondary-core CPU, and therefore does not perform a task that is woken up after being blocked. This ensures correct unfreezing of a blocked task.

In a possible implementation, the putting a first device of a first type into dormancy based on device status information includes: filtering out the second device from devices of the first type based on the device status information, to determine the first device of the first type; and putting the first device into dormancy.

In this embodiment of this application, a dormant peripheral (for example, in a shut-down state) may be filtered out from peripherals (for example, all peripherals) of the system, and a peripheral remaining after the filtering is put into dormancy, to reduce a quantity of devices to be put into dormancy.

In a possible implementation, the method further includes: when it is detected that a third device of the first type is in a running state during system operation, recording or updating a device status of the third device to a first state, to generate or update the device status information, where the first state is information indicating that the third device is in the running state; and when it is detected that a fourth device of the first type is not in a running state during system operation, recording or updating a device status of the fourth device to a second state, to generate or update the device status information, where the second state is information indicating that the fourth device is not in a running state, the device status is the first state or the second state, and the at least one device includes the third device and/or the fourth device.

For example, during system operation, the operating system does not enter an S3 state (a dormant state).

The S3 state indicates that only necessary devices such as a memory are powered to prevent data loss, and other components are in a shut-down state, so that power consumption of the system is quite low.

For example, during system operation, it is detected that a peripheral 1 is in a running state. In this case, when a device status of the peripheral 1 is not recorded in a data structure (for example, a linked list) corresponding to device status information, in this application, the device status of the peripheral 1 may be recorded as a running state in the data structure, to generate device status information.

For example, during system operation, it is detected that a peripheral 2 is in a running state. In this case, when a device status (for example, a stopped state) of the peripheral 2 is recorded in a data structure (for example, a linked list) corresponding to device status information, in this application, the device status of the peripheral 2 may be updated from the stopped state to the running state in the data structure, to update the device status information.

The foregoing two examples are used for a reader to understand a meaning of recording or updating a device status to generate or update device status information.

In this embodiment of this application, during system operation, a detected device in a running state and/or a detected device not in a running state are recorded or updated to the foregoing data structure (for example, a linked list), to generate or update the device status information. In this way, during system dormancy, a quantity of devices to be put into dormancy is reduced based on a device that is in the second state (a non-running state) and that is recorded in the device status information, to increase a device dormancy speed.

In a possible implementation, after the putting a first device of a first type into dormancy based on device status information, the method further includes: recording or updating, in the device status information, a device status of the first device to the second state.

For example, during system dormancy, after the first device (for example, some peripherals) is put into dormancy based on the device status information, all peripherals may be put into dormancy. In this case, to ensure accuracy of the device status information, status information of a peripheral put into dormancy during system dormancy may be recorded or updated in the device status information, so that the device status of the first device in the device status information is a non-running state (for example, the second state).

In a possible implementation, this application provides a system wake-up method. The method includes: in response to receiving a system wake-up request, waking up a first device of a first type based on device status information, where the device status information includes a device status of at least one device of the first type, the device status is information indicating whether the device is in a running state, the first device is different from a second device, and the second device is a device in a running state in the at least one device; and unfreezing a first task in a frozen state, where the first task is not in a blocked state when the first task is frozen.

In this embodiment of this application, for a part similar to that of the system dormancy method and same terms and objects, refer to related descriptions in the foregoing embodiment of the system dormancy method. Details are not described herein again.

For example, the device status information may be generated during system operation based on whether the at least one device is in a running state. In this application, whether at least one peripheral device is in a running state may be detected during system operation, so that a device status of the peripheral device can be maintained during system operation.

For example, the device status may include a first state or a second state. The first state indicates that the device is in a running state (for example, in a started state or a powered-on state). For example, that the device is in a running state is also referred to as that the device is in an awake state. The second state indicates that the device is not in a running state (for example, in a shut-down state, a stopped state, or a powered-off state). For example, that the device is not in a running state is also referred to as that the device is in a dormant state. That the device is in a running state is also referred to as that the device is in an awake state.

In this embodiment of this application, when during system wake-up, a device may be woken up, and then a task is unfrozen. During device wake-up, a quantity of devices to be woken up may be reduced based on device status information maintained during system operation, to accelerate a device wake-up process. During task unfreezing, a task in a blocked state may not be unfrozen, so that a quantity of tasks to be unfrozen is reduced, and a task unfreezing speed is increased. In this way, an overall system wake-up speed can be increased, and duration of the system wake-up process can be shortened. This can shorten response time for system wake-up (for example, screen-on) for an electronic device on which the system is installed, and improve user experience.

In a possible implementation, before the waking up a first device of a first type based on device status information, the method further includes: after a CPU is activated, when it is detected that the system wake-up request is a preset wake-up request, increasing an operating frequency of the CPU to a first frequency, where the first frequency is a maximum operating frequency of the CPU.

For example, when the CPU in the system is a single-core CPU, after a primary-core CPU is activated, a frequency of the primary-core CPU may be increased according to a frequency increasing policy in this application. For example, when the CPU in the system is a multi-core CPU, after a secondary-core CPU is activated, a frequency of the secondary-core CPU may be increased according to a frequency increasing policy in this application.

For example, the preset wake-up request is a wake-up request related to user experience.

Effect and a principle of this implementation are similar to those of the frequency increasing implementation corresponding to the foregoing system dormancy method, and details are not described herein again.

In this embodiment, when the system wake-up request is the preset wake-up request, the operating frequency of the CPU may be increased to the maximum operating frequency to increase an instruction execution speed of the CPU. In this case, when the foregoing system wake-up-related operations are performed in response to the system wake-up request, the overall system wake-up process may be accelerated (for example, a task unfreezing process and a device wake-up process may be accelerated), to improve user experience to a maximum extent.

In a possible implementation, before the waking up a first device of a first type based on device status information, the method further includes: after the CPU is activated, when it is detected that the system wake-up request is not the preset wake-up request, increasing the operating frequency of the CPU to a second frequency, where the second frequency is less than the first frequency, and the CPU achieves a highest energy efficiency ratio when the operating frequency of the CPU is the second frequency.

Effect and a principle of this implementation are similar to those of the frequency increasing implementation corresponding to the foregoing system dormancy method, and details are not described herein again.

In this embodiment, when the system wake-up request is not the preset wake-up request, it indicates that the system wake-up request is not related to user experience, and the user does not care about a speed of the system wake-up process. In this case, to reduce power consumption, the operating frequency of the CPU may be adjusted to the operating frequency with the optimal energy efficiency ratio, to reduce system power consumption to a maximum extent.

It can be understood that this application provides a frequency adjustment policy for a CPU in a system dormancy or wake-up scenario. The frequency adjustment policy includes: when a system dormancy request or a system wake-up request is a preset request, increasing a frequency of the CPU to a maximum operating frequency; or when a system dormancy request or a system wake-up request is not a preset request, increasing a frequency of the CPU to an operating frequency with an optimal energy efficiency ratio.

In a possible implementation, after the unfreezing a first task in a frozen state, the method further includes: restoring a frequency adjustment policy for the CPU to an original frequency adjustment policy, where the original frequency adjustment policy is a frequency adjustment policy used for the CPU before the system wake-up request is received.

For example, the original frequency adjustment policy for the CPU is not limited in this application. The original frequency adjustment policy is a frequency adjustment policy used for the CPU before a frequency increasing operation in this application in a system dormancy or wake-up process is performed.

For example, the original frequency adjustment policy may be a fixed frequency adjustment policy. To be specific, the operating frequency of the CPU is adjusted to a fixed operating frequency configured in the policy. For example, the original frequency adjustment policy may alternatively be a dynamic frequency adjustment policy. To be specific, the operating frequency of the CPU is flexibly adjusted based on a task running on the CPU.

In a possible implementation, the first task is a task that is not in a blocked state in a task of a second type, and the task of the second type is a task other than a system task in an operating system.

Effect and a principle of this implementation are similar to those of the implementation, corresponding to the foregoing system dormancy method, of filtering out a system task and a task in a blocked state, and details are not described herein again.

In this embodiment, during task unfreezing, system tasks (including a system service task in a user mode and a system task in a kernel mode) do not need to be unfrozen, and only a task that is not in a blocked state in common tasks needs to be unfrozen. There are many system tasks, and the system tasks do not need to be unfrozen. This can greatly increase a task unfreezing speed, to shorten system wake-up duration.

In a possible implementation, the waking up a first device of a first type based on device status information includes: filtering out the second device from devices of the first type based on the device status information, to determine the first device of the first type; and waking up the first device.

In this embodiment of this application, a woken-up peripheral (for example, in a running state) may be filtered out from peripherals (for example, all peripherals) of the system, and a peripheral remaining after the filtering is woken up, to reduce a quantity of devices to be woken up.

In a possible implementation, the method further includes: when it is detected that a third device of the first type is in a running state during system operation, recording or updating a device status of the third device to a first state, to generate or update the device status information, where the first state is information indicating that the third device is in the running state; and when it is detected that a fourth device of the first type is not in a running state during system operation, recording or updating a device status of the fourth device to a second state, to generate or update the device status information, where the second state is information indicating that the fourth device is not in a running state, the device status is the first state or the second state, and the at least one device includes the third device and/or the fourth device.

Effect and a principle of this implementation are similar to those of the implementation, corresponding to the foregoing system dormancy method, of generating and updating device status information, and details are not described herein again.

In this embodiment of this application, during system operation, a detected device in a running state and/or a detected device not in a running state are recorded or updated to the foregoing data structure (for example, a linked list), to generate or update the device status information. In this way, during system wake-up, a quantity of devices to be woken up is reduced based on a device that is in the first state (a running state) and that is recorded in the device status information, to increase a device wake-up speed.

In a possible implementation, after the waking up a first device of a first type based on device status information, the method further includes: recording or updating, in the device status information, a device status of the first device to the first state.

For example, during system wake-up, after the first device (for example, some peripherals) is woken up based on the device status information, all peripherals may be woken up. In this case, to ensure accuracy of the device status information, status information of a peripheral woken up during system wake-up may be recorded or updated in the device status information, so that the device status of the first device in the device status information is a running state (for example, the first state).

In a possible implementation, this application provides a system dormancy apparatus. The system dormancy apparatus includes: a filter module, configured to: in response to receiving a system dormancy request, filter out a first task in a blocked state; a freezing module, configured to freeze a filtered second task that is not in a blocked state; and a device dormancy module, configured to put a first device of a first type into dormancy based on device status information, where the device status information includes a device status of at least one device of the first type, the device status is information indicating whether the device is in a running state, the first device is different from a second device, and the second device is a device that is not in a running state in the at least one device.

In a possible implementation, the system dormancy apparatus further includes: a first frequency increasing module, configured to: when it is detected that the system dormancy request is a preset dormancy request, increase an operating frequency of a CPU to a first frequency, where the first frequency is a maximum operating frequency of the CPU.

In a possible implementation, the system dormancy apparatus further includes: a second frequency increasing module, configured to: when it is detected that the system dormancy request is not the preset dormancy request, increase the operating frequency of the CPU to a second frequency, where the second frequency is less than the first frequency, and the CPU achieves a highest energy efficiency ratio when the operating frequency of the CPU is the second frequency.

In a possible implementation, the filter module is specifically configured to filter out the first task in the blocked state from a task of a second type, where the task of the second type is a task other than a system task in an operating system.

In a possible implementation, the system dormancy apparatus further includes: a signal sending module, configured to send a freezing signal to the task of the second type, where the freezing signal indicates to freeze the task.

In a possible implementation, the system dormancy apparatus further includes: a storage module, configured to store, to a first data structure, a third task that is not in a frozen state in the second task; a traversal module, configured to cyclically traverse the third task in the first data structure, and detect a task status of the traversed third task; and a deletion module, configured to: when it is detected in the first data structure that the task status of the third task is the frozen state, delete the third task in the frozen state from the first data structure, where the traversal module is further configured to: when it is detected in the first data structure that the task status of the third task is not the frozen state, continue to cyclically traverse the first data structure until the first data structure is empty.

In a possible implementation, the CPU of the system is a multi-core CPU, the multi-core CPU includes a primary-core CPU and at least one secondary-core CPU, and the system dormancy apparatus further includes: a retention module, configured to: before a first secondary-core CPU is powered off, retain a timer and a task on the first secondary-core CPU without migrating the timer or the task to a second CPU, where the second CPU is a second secondary-core CPU or the primary-core CPU, and the at least one secondary-core CPU includes the first secondary-core CPU, or further includes the second secondary-core CPU.

In a possible implementation, the device dormancy module is specifically configured to: filter out the second device from devices of the first type based on the device status information, to determine the first device of the first type; and put the first device into dormancy.

In a possible implementation, the system dormancy apparatus further includes: a device status management module, configured to: when it is detected that a third device of the first type is in a running state during system operation, record or update a device status of the third device to a first state, to generate or update the device status information, where the first state is information indicating that the third device is in the running state; and when it is detected that a fourth device of the first type is not in a running state during system operation, record or update a device status of the fourth device to a second state, to generate or update the device status information, where the second state is information indicating that the fourth device is not in a running state, the device status is the first state or the second state, and the at least one device includes the third device and/or the fourth device.

In a possible implementation, the device status management module is further configured to: record or update, in the device status information, a device status of the first device to the second state.

Effect of the system dormancy apparatus in the foregoing implementations is similar to that of the system dormancy method in the foregoing implementations, and details are not described herein again.

In a possible implementation, this application provides a system wake-up apparatus. The system wake-up apparatus includes: a device wake-up module, configured to: in response to receiving a system wake-up request, wake up a first device of a first type based on device status information, where the device status information includes a device status of at least one device of the first type, the device status is information indicating whether the device is in a running state, the first device is different from a second device, and the second device is a device in a running state in the at least one device; and an unfreezing module, configured to unfreeze a first task in a frozen state, where the first task is not in a blocked state when the first task is frozen.

In a possible implementation, the system wake-up apparatus further includes: a first frequency increasing module, configured to: after a CPU is activated, when it is detected that the system wake-up request is a preset wake-up request, increase an operating frequency of the CPU to a first frequency, where the first frequency is a maximum operating frequency of the CPU.

In a possible implementation, the system wake-up apparatus further includes: a second frequency increasing module, configured to: after the CPU is activated, when it is detected that the system wake-up request is not the preset wake-up request, increase the operating frequency of the CPU to a second frequency, where the second frequency is less than the first frequency, and the CPU achieves a highest energy efficiency ratio when the operating frequency of the CPU is the second frequency.

In a possible implementation, the system wake-up apparatus further includes: a frequency increasing cancellation module, configured to restore a frequency adjustment policy for the CPU to an original frequency adjustment policy, where the original frequency adjustment policy is a frequency adjustment policy used for the CPU before the system wake-up request is received.

In a possible implementation, the first task is a task that is not in a blocked state in a task of a second type, and the task of the second type is a task other than a system task in an operating system.

In a possible implementation, the device wake-up module is specifically configured to: filter out the second device from devices of the first type based on the device status information, to determine the first device of the first type; and wake up the first device.

In a possible implementation, the system wake-up apparatus further includes: a device status management module, configured to: when it is detected that a third device of the first type is in a running state during system operation, record or update a device status of the third device to a first state, to generate or update the device status information, where the first state is information indicating that the third device is in the running state; and when it is detected that a fourth device of the first type is not in a running state during system operation, record or update a device status of the fourth device to a second state, to generate or update the device status information, where the second state is information indicating that the fourth device is not in a running state, the device status is the first state or the second state, and the at least one device includes the third device and/or the fourth device.

In a possible implementation, the device status management module is further configured to: record or update, in the device status information, a device status of the first device to the first state.

Effect of the system wake-up apparatus in the foregoing implementations is similar to that of the system wake-up method in the foregoing implementations, and details are not described herein again.

In a possible implementation, this application provides a system dormancy apparatus. The system dormancy apparatus includes one or more interface circuits and one or more processors. The interface circuit is configured to receive a signal from a memory, and send the signal to the processor. The signal includes computer instructions stored in the memory. When the processor executes the computer instructions, the processor can implement the system dormancy method in any one of the foregoing implementations.

Effect of the system dormancy apparatus in this implementation is similar to that of the system dormancy method in the foregoing implementations, and details are not described herein again.

In a possible implementation, this application provides a system wake-up apparatus. The system wake-up apparatus includes one or more interface circuits and one or more processors. The interface circuit is configured to receive a signal from a memory, and send the signal to the processor. The signal includes computer instructions stored in the memory. When the processor executes the computer instructions, the processor can implement the system wake-up method in any one of the foregoing implementations.

Effect of the system wake-up apparatus in this implementation is similar to that of the system wake-up method in the foregoing implementations, and details are not described herein again.

In a possible implementation, this application provides a computer-readable storage medium. The computer-readable storage medium stores a computer program. When the computer program runs on a computer or a processor, the computer or the processor is enabled to perform the system dormancy method in any one of the foregoing implementations, or the computer or the processor is enabled to perform the system wake-up method in any one of the foregoing implementations.

Effect of the computer-readable storage medium in this implementation is similar to that of the system dormancy method or the system wake-up method in the foregoing implementations, and details are not described herein again.

In a possible implementation, this application provides a computer program product. The computer program product includes a software program. When the software program is executed by a computer or a processor, the system dormancy method or the system wake-up method in any one of the foregoing implementations is performed.

Effect of the computer program product in this implementation is similar to that of the system dormancy method or the system wake-up method in the foregoing implementations, and details are not described herein again.

### BRIEF DESCRIPTION OF DRAWINGS

To describe technical solutions in embodiments of this application more clearly, the following briefly describes accompanying drawings for describing embodiments of this application. Clearly, the accompanying drawings in the following descriptions show merely some embodiments of this application, and a person of ordinary skill in the art may still derive other drawings from these accompanying drawings without creative efforts.
FIG. 1 is an example schematic diagram of a system dormancy and wake-up process in the conventional technology;
FIG. 2a is an example schematic diagram of a microkernel architecture of a host;
FIG. 2b is an example schematic diagram of software architecture of a system;
FIG. 2c is an example schematic diagram of interaction between modules;
FIG. 3a is an example schematic diagram of a system dormancy process;
FIG. 3b is an example schematic diagram of a system wake-up process;
FIG. 4a is an example schematic diagram of a frequency increasing process;
FIG. 4b is an example line graph of test data;
FIG. 5a is an example schematic diagram of a task freezing process;
FIG. 5b is an example schematic diagram of a task freezing process;
FIG. 6a is an example schematic diagram of a device status management process;
FIG. 6b is an example schematic diagram of a device dormancy process;
FIG. 6c is an example schematic diagram of a device wake-up process;
FIG. 7a is a schematic diagram of a structure of an apparatus according to an embodiment of this application;
FIG. 7b is a schematic diagram of a structure of an apparatus according to an embodiment of this application; and
FIG. 8 is a schematic diagram of a structure of a chip according to an embodiment of this application.

### DESCRIPTION OF EMBODIMENTS

The following clearly and completely describes technical solutions in embodiments of this application with reference to accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects, but not to indicate a specific order of the objects. For example, a first target object and a second target object are intended to distinguish between different target objects, but not to indicate a specific order of the target objects.

In embodiments of this application, the terms such as "example" or "for example" are used to give an example, an illustration, or a description. Any embodiment or design scheme described as an "example" or "for example" in embodiments of this application should not be construed as being more preferred or more advantageous than another embodiment or design scheme. To be precise, the terms such as "example" or "for example" are intended to present a related concept in a specific manner.

In descriptions of embodiments of this application, "a plurality of" means two or more, unless otherwise specified. For example, a plurality of processing units are two or more processing units, and a plurality of systems are two or more systems.

In the field of dormancy and wake-up of computer operating systems, an ACPI (advanced configuration and power interface, Advanced Configuration and Power Interface) defines six power states: S0 to S5.

S0: an operating state (also referred to as a running state). All devices are turned on.

S1: power on suspend (POS for short). A CPU clock is disabled, and other components still operate properly.

S2: A CPU stops operation, a bus clock is disabled, and other components still operate properly.

S3: suspend to RAM (STR for short, also referred to as a dormant state). Only necessary devices such as a memory are powered to prevent data loss, and other components are in a shut-down state, so that power consumption of the system is quite low.

S4: suspend to disk (STD for short). A primary power supply of the system is turned off, but a hard disk is still powered on and can be woken up. This is a power state more power-saving than S4.

S5: All devices including a power supply are turned off, and power consumption of the system is 0.

In the art, an electronic device may control, based on different states of a power supply, an operating system to enter S3 (also referred to as a dormant state) when the operating system does not need to operate, to reduce system power consumption. When a wake-up interrupt occurs, the electronic device may wake up the operating system of the device from the dormant state to recover to S0 (also referred to as a running state or an awake state), so that the system resumes operation.

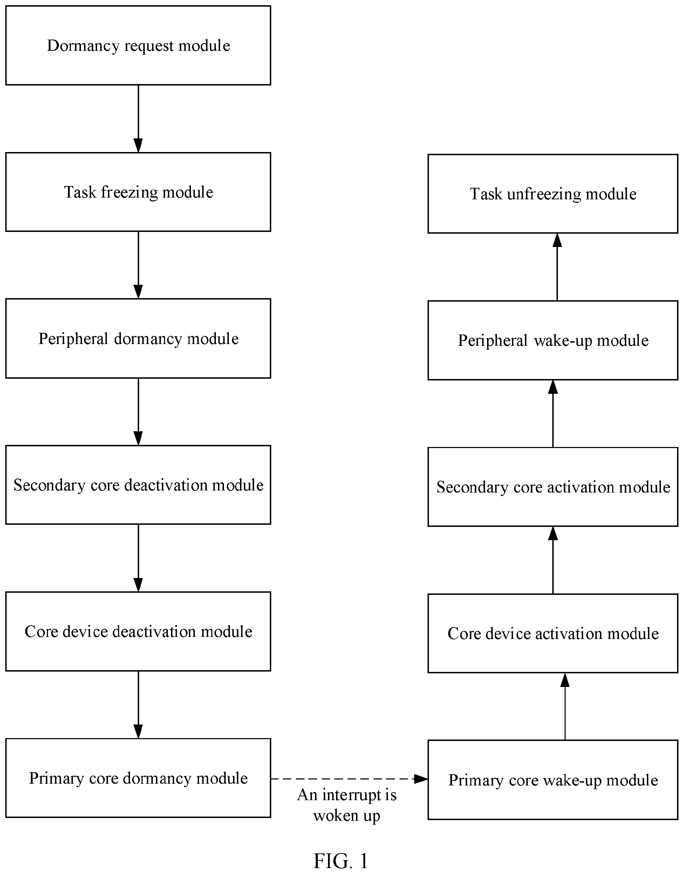

Currently, electronic devices generally have dormancy and wake-up functions. FIG. 1 is an example schematic diagram of dormancy and wake-up processes of a system in a Linux kernel architecture in the conventional technology.

As shown in FIG. 1, a dormancy process is as follows: First, a dormancy request is initiated in a user mode, and a dormancy request module may receive the dormancy request. Then a task freezing module may freeze a task based on the dormancy request, and specifically, freeze a user-mode task and a kernel-mode task. For example, a freezing process may be understood as that a kernel sets statuses of all processes in a process list to a stopped state, and stores contexts of all the processes. For example, the freezing a kernel-mode task may be setting a status of the kernel-mode task (for example, a system task) to a stopped state. Then a peripheral dormancy module may call a suspend (suspend) callback function for a registered device to put peripherals into dormancy according to a registration sequence. Then a secondary core deactivation module may put a secondary-core CPU into dormancy, to deactivate the secondary-core CPU. Then a core device deactivation module may control a core device to stop operation, to deactivate the core device. Finally, a primary core dormancy module may control a primary-core CPU to enter a dormant state, so that the primary-core CPU is dormant.

A wake-up process is as follows: An operating system in a dormant state is woken up by an interrupt or another event shown in FIG. 1. It can be learned from FIG. 1 that a step execution sequence of the wake-up process is opposite to that of the dormancy process. Brief description is provided below. First, a primary core wake-up module may start the primary-core CPU to wake up the primary core. Then a core device activation module may start the core device, to activate the core device. Then a secondary core activation module may start the secondary-core CPU, to activate the secondary-core CPU. Then a peripheral wake-up module may start a peripheral to wake up the peripheral. Finally, a task unfreezing module may start the user-mode task and the kernel-mode task in the stopped state, to unfreeze the task, so that the task is in a running state. In this case, the wake-up process is completed.

In the solution in FIG. 1, in the dormancy process, a task freezing process is time-consuming, and a larger quantity of tasks to be frozen indicates that the process takes longer time. In addition, in the dormancy and wake-up processes, a device (including a peripheral) dormancy process and a device (including a peripheral) wake-up process are also time-consuming, and a larger quantity of hardware devices in an electronic device indicates that the process takes longer time. Therefore, in the system dormancy and wake-up solution in the related technology, because the task freezing, device dormancy, and device wake-up processes are time-consuming, the dormancy process and the wake-up process of the system are excessively time-consuming, and dormancy and wake-up speeds are low.

Longer time consumed in the dormancy process and the wake-up process of the system indicates higher power consumption of the dormancy and wake-up processes. In addition, longer time consumed in the dormancy and wake-up processes may further lead to excessively long response time for dormancy and wake-up (for example, screen-on and screen-off), affecting user experience. In addition, low dormancy and wake-up speeds of the system may shorten standby duration of the electronic device.

In view of this, this application provides a dormancy and wake-up method for an operating system. A frequency of a CPU may be increased to increase speeds of dormancy and wake-up processes of the operating system and reduce duration consumed in the dormancy and wake-up processes. In addition, a quantity of tasks to be frozen and a quantity of devices to be put into dormancy or woken up are reduced, to shorten duration consumed in the dormancy and wake-up processes of the operating system, so as to shorten response time for dormancy and wake-up (for example, screen-on and screen-off) of the electronic device, improve user experience, and reduce power consumption overheads of the system. In addition, the speeds of the dormancy and wake-up processes are increased, so that standby duration of the electronic device can be extended.

For example, an electronic device on which the operating system to be put into dormancy and woken up in this application is installed may be a cellular phone (cellular phone), a tablet computer (pad), a wearable device or an internet of things device, or a cockpit domain controller (CDC, Cockpit Domain Controller). This is not limited in this application.

The following explains technical terms in this application.

In a computer system, dormancy indicates that a CPU is downgraded from a higher-level active state to an inactive state on a power management module, and wake-up indicates that a signal is received to enable the system to resume operation. In embodiments of this application, description is provided by using an example in which a system enters an S3 state in a dormancy process and the system enters an S0 state in a wake-up process.

Power consumption is an amount of energy consumed per unit time, in a unit of W.

Frequency increasing means increasing an operating frequency of a CPU to improve performance of the CPU.

Task freezing means setting a status of a task to a stopped state to suspend operation of the task. A frozen task cannot produce data or interact with any module. A task status of a frozen task is a freeze (freeze) state.

Task unfreezing means recovering a status of a task from a frozen state to a running state, so that the task can continue to be performed in a task status that exists at a moment at which the task is frozen. An unfrozen task may produce data and interact with another module.

For example, a task 1 is frozen at a moment t1. Therefore, execution of all data and operations for the task 1 is suspended at the moment t1. After the task 1 is unfrozen at a moment t2, all data and operations for the task 1 may continue to be executed at the moment t2. The moment t2 is later than the moment t1.

For example, the task described in embodiments of this application may include but is not limited to a thread or a process.

A core device is a device that may affect operation of the CPU. For example, the core device may include a hardware device in the CPU.

A peripheral device (peripheral for short) is a device that does not affect operation of the CPU. The system may include a device list of peripheral devices. For example, the peripheral device may include but is not limited to a mouse, a keyboard, a printer, and the like.

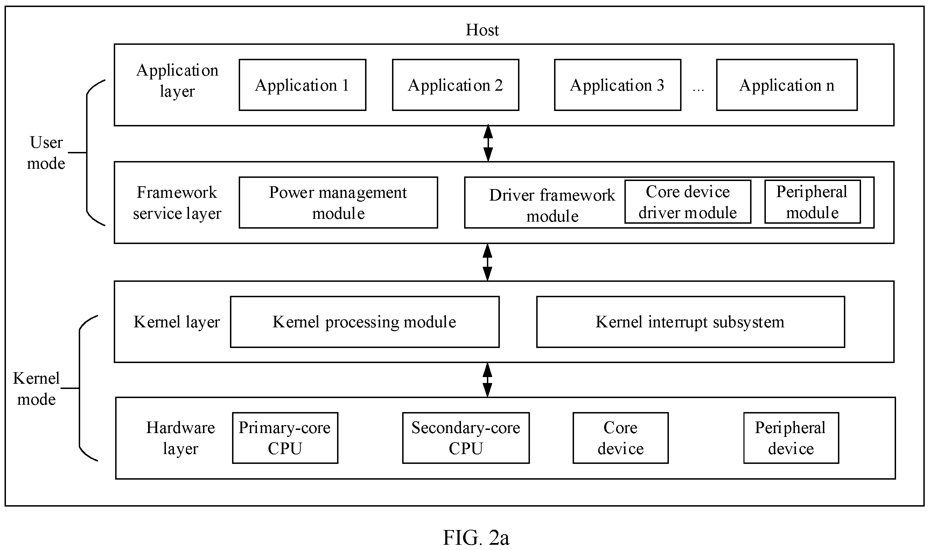

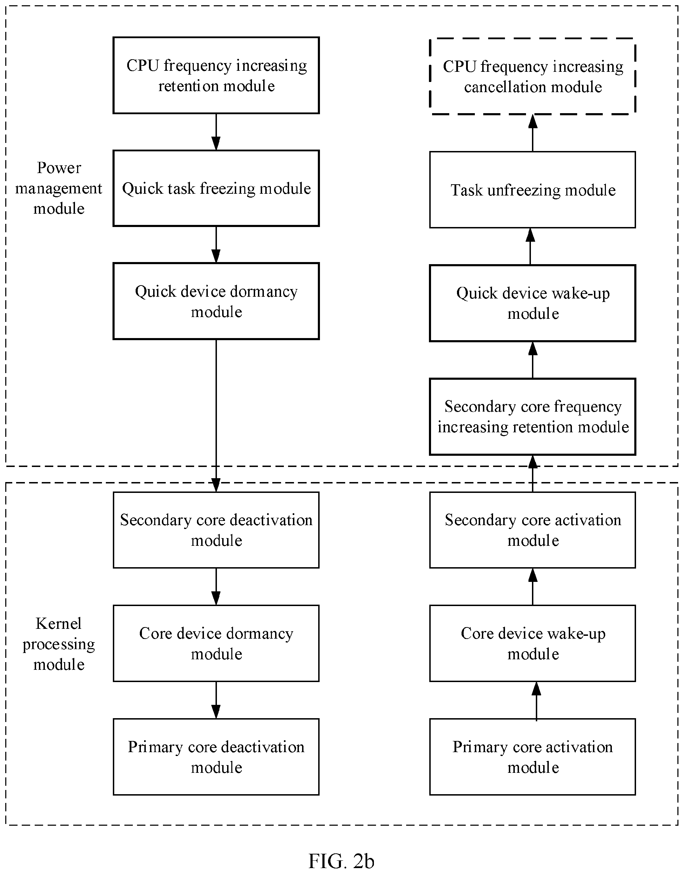

FIG. 2a is an example schematic diagram of a microkernel architecture of a host according to this application. FIG. 2b may be a schematic diagram of a software architecture of a system according to this application.

The following describes the system in this application with reference to FIG. 2a and FIG. 2b. As shown in FIG. 2a, the host in this application may be in a hierarchical architecture including an application layer, a framework service layer, a kernel layer, and a hardware layer.

For example, the application layer and the framework service layer may be implemented in a user mode, and the kernel layer and the hardware layer may be implemented in a kernel mode.

For example, the application layer may include at least one application program. An application 1 to an application n are shown herein as examples.

For example, the application layer may receive user input.

For example, the framework service layer (also referred to as a microkernel service layer, or a user-mode basic service of a microkernel) may include but is not limited to a power management module (also referred to as a power management service), a driver framework module, and the like. Herein, only two service modules at the framework service layer are shown as examples. The service framework layer may further include more service modules. This is not limited herein.

An operating system in embodiments of this application is implemented in the microkernel architecture. Functional modules at the framework service layer may be migrated from a kernel mode to a user mode in the microkernel architecture, to provide corresponding services for a user through functions in a form of applications.

For example, the power management module may be configured to perform power management.

For example, the driver framework module may be configured to run drivers of hardware devices.

For example, the kernel layer may include a kernel processing module and a kernel interrupt subsystem.

For example, the hardware layer may include a multi-core CPU, and the multi-core CPU may include a primary-core CPU and at least one secondary-core CPU (one secondary-core CPU is shown herein as an example). In addition, the hardware layer may further include a core device and a peripheral device. For definitions of the two types of devices, refer to the foregoing descriptions. Details are not described herein again.

Based on the microkernel architecture in FIG. 2a, tasks in the operating system may be classified into a user-mode task and a kernel-mode task.

For example, the user-mode task is a task (for example, a process or a thread) running in the user mode.

For example, the user-mode task may include a common task and a user-mode system service task.

For example, the common task is a task created based on a trigger operation performed by a user, for example, a task created based on a trigger operation performed by the user on an application at the application layer or a service at the framework service layer in the user mode in FIG. 2a.

For example, the user triggers a music playing task operation on a music application (for example, an application at the application layer in FIG. 2a), and a music playing task created by the system in response to the user operation is a common task.

For example, the user-mode system service task is a system task triggered by each service module (not triggered by the user) at the framework service layer shown in FIG. 2a, for example, a task for displaying a home screen of a mobile phone.

For example, the kernel-mode task is a system task running in the kernel mode. In the microkernel architecture in this application, overheads of the kernel layer are low.

In embodiments of this application, the system task may include a user-mode system service task and a kernel-mode system task.

It should be noted that the application layer, the framework service layer, the kernel layer, and the hardware layer shown in FIG. 2a do not constitute a specific limitation on a device. In some other embodiments of this application, the device may include more or fewer layers than those shown in the figure, and each layer may include more or fewer components than those shown in the figure, or some components may be combined, or some components may be split, or components may be arranged in different manners. The layers and components shown in FIG. 2a may be implemented in hardware that includes one or more signal processing and/or application-specific integrated circuits, software, or a combination of hardware and software.

FIG. 2b is an example schematic diagram of dormancy and wake-up processes of an operating system according to this application. A left part in FIG. 2b is a schematic diagram of the dormancy process of the operating system, and a right part in FIG. 2b is a schematic diagram of the wake-up process of the operating system.

With reference to FIG. 2a, as shown in FIG. 2b, for example, the power management module (also referred to as a dormancy and wake-up management module) may include but is not limited to a CPU frequency increasing retention module, a quick task freezing module, a quick device dormancy module, a secondary core frequency increasing retention module, a quick device wake-up module, and a task unfreezing module shown in FIG. 2b, and optionally, includes a CPU frequency increasing cancellation module.

With reference to FIG. 2a, as shown in FIG. 2b, for example, the kernel processing module (also referred to as a core processing module) may include but is not limited to a secondary core deactivation module, a core device dormancy module, a primary core deactivation module, a primary core activation module, a core device wake-up module, and a secondary core activation module shown in FIG. 2b.

In the related technology, the system shown in FIG. 1 is applied to an operating system in a kernel architecture. The system shown in FIG. 2b in this application may be applied to an operating system (for example, a Linux operating system) in a kernel architecture, and may also be applied to an operating system in the microkernel architecture shown in FIG. 2a. An example in which the system in this application is applied to an operating system in the microkernel architecture is used below for description. When the system in this application is applied to an operating system in a kernel architecture, a principle is similar, and details are not described again.

Compared with FIG. 1, as shown in FIG. 2b, the following software modules are added to the system in this application: the CPU frequency increasing retention module, the secondary core frequency increasing retention module, the quick task freezing module, the quick device dormancy module, and the quick device wake-up module. Optionally, the CPU frequency increasing cancellation module is further included. The foregoing modules are a main difference from the solution shown in FIG. 1. However, other modules in FIG. 2b are also different from corresponding modules in FIG. 1. The following describes specific differences in detail.

For example, the CPU frequency increasing retention module and the secondary core frequency increasing retention module may implement a precise CPU frequency increasing mechanism, and may be specifically configured to obtain a system dormancy or wake-up request, and determine whether the request is a preset request (a preset dormancy request or a preset wake-up request). If the request is the preset request (the preset dormancy request or the preset wake-up request), it indicates that the request is strongly related to user experience. Therefore, an operating frequency of the CPU (the primary-core CPU and/or the secondary-core CPU) may be increased to a maximum operating frequency, to increase an instruction execution speed of the CPU and accelerate a system dormancy or wake-up process. On the contrary, if the request is not the preset request, it indicates that the request is not strongly related to user experience. Therefore, an operating frequency of the CPU may be increased to an operating frequency with an optimal energy efficiency ratio, to perform a dormancy or wake-up process with lowest CPU power consumption.

For example, the precise CPU frequency increasing mechanism may be considered as a CPU frequency increasing policy provided in this application. The CPU frequency increasing policy may be triggered in a system dormancy process or a system wake-up process.

For example, the preset dormancy request is a dormancy request related to user experience, and the preset wake-up request is a wake-up request related to user experience. For example, a request related to user experience may be a system dormancy request in a scenario in which a user expects a higher speed and shorter duration of a system dormancy (or wake-up) process.

For example, when the operating frequency of the CPU is an operating frequency a with an optimal energy efficiency ratio, the CPU achieves a highest energy efficiency ratio. It can be understood that, when the CPU performs a same quantity of instruction execution tasks at different operating frequencies, the CPU has lowest power consumption when the operating frequency of the CPU is the operating frequency a. Therefore, the operating frequency a may be named as an operating frequency with an optimal energy efficiency ratio for the CPU.

For example, the quick task freezing module may implement a quick task freezing mechanism. In this mechanism, no waiting needs to be performed for a blocked task, and optionally, no system task needs to be frozen, so that a quantity of tasks to be frozen is reduced, to implement quick task freezing and accelerate a system dormancy process.

For example, when the quick task freezing module filters tasks, an execution sequence of a step of filtering out a task in a blocked state and a step of filtering out a system task is not limited. Optionally, a system task is first filtered out to obtain a common task, and then a task in a blocked state is filtered out from the common task, and only a common task in a non-blocked state is frozen, to accelerate task freezing.

For example, the quick task freezing module may alternatively directly identify a common task, and then filter out a task in a blocked state from the common task, and therefore freeze only a common task in a non-blocked state, to accelerate task freezing.

For example, the quick device dormancy module and the quick device wake-up module may manage and record statuses (a dormant state or an awake state) of peripheral devices during system operation based on a runtime dormancy and wake-up mechanism. In this way, when the system needs to be put into dormancy or woken up, a quantity of peripheral device nodes to be put into dormancy or woken up can be reduced based on the recorded statuses of the peripheral devices, to implement quick device dormancy or wake-up, and accelerate a system dormancy or wake-up process.

For example, the CPU frequency increasing cancellation module may be configured to: after a task is unfrozen, restore a frequency adjustment policy for the CPU to an original frequency adjustment policy, where the original frequency adjustment policy is a frequency adjustment policy used for the CPU before a system wake-up request is received.

For example, the CPU herein is a CPU whose frequency has been increased according to the frequency increasing policy in this application in a system dormancy or wake-up process, and may be a primary-core CPU or a secondary-core CPU. This is not limited in this application.

For example, the original frequency adjustment policy for the CPU is not limited in this application. The original frequency adjustment policy is a frequency adjustment policy used for the CPU before a frequency increasing operation in this application in a system dormancy or wake-up process is performed.

For example, the original frequency adjustment policy may be a fixed frequency adjustment policy. To be specific, the operating frequency of the CPU is adjusted to a fixed operating frequency configured in the policy. For example, the original frequency adjustment policy may alternatively be a dynamic frequency adjustment policy. To be specific, the operating frequency of the CPU is flexibly adjusted based on a task running on the CPU.

The modules and communication connection relationships in the system in this application shown in FIG. 2b are merely examples. The system in this application may have more or fewer modules than those shown in the figure, two or more modules may be combined, or the modules may be configured in different manners. The modules shown in FIG. 2b may be implemented in hardware that includes one or more signal processing and/or application-specific integrated circuits, software, or a combination of hardware and software.

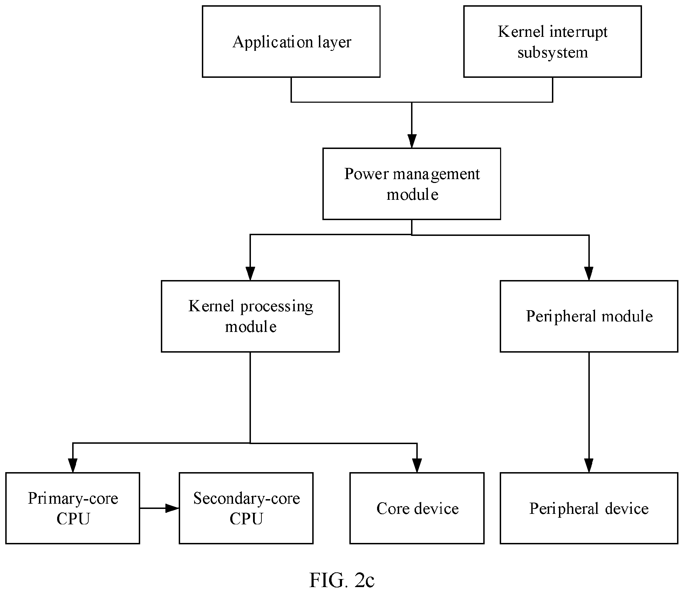

FIG. 2c is a schematic diagram of interaction between some components in FIG. 2a in system dormancy process or a system wake-up process.

It should be noted that interaction between different modules is indicated by unidirectional arrows in FIG. 2c. In specific application, bidirectional interaction and communication may be performed between different modules. Details are not described herein.

The following describes an operation process of the modules in FIG. 2b with reference to FIG. 2c.

### Embodiment 1: a system dormancy process

Step 11: Receive a system dormancy request.

For example, as shown in FIG. 2c, the power management module may receive the system dormancy request from the application layer or the kernel interrupt subsystem.

For example, the system dormancy request may be a preset event triggered by the system, or a preset event triggered by a user at the application layer.

A system dormancy method in this application may be applied to a system dormancy scenario of an electronic device such as a mobile phone, or may be applied to a system dormancy scenario of a motor vehicle, or a dormancy scenario of another electronic device. This is not limited in this application.

For example, when the system dormancy request is triggered by the user at the application layer, the power management module may receive, from the application layer, the system dormancy request triggered by the user.

For example, the system in this application is applied to a mobile phone, and the user may trigger the system dormancy request by touching a lock screen button of the mobile phone. If the user expects quick screen-off, the system dormancy request herein is a preset dormancy request strongly related to user experience. It can be understood that the preset dormancy request strongly related to user experience is not limited to the example herein.

For example, the system in this application may be applied to a CDC in a motor vehicle scenario. If a motor vehicle does not move for a long time, and a user does not perform any operation on a display of the motor vehicle for a long time, the system may trigger a system dormancy request to put a system of the motor vehicle into dormancy. The system dormancy request herein is not a preset dormancy request strongly related to user experience.

For example, in the motor vehicle scenario, the CDC may be divided into an instrument domain and an entertainment domain. For example, the preset dormancy request may include a dormancy request related to display in the instrument domain or the entertainment domain.

For example, when the system dormancy request is triggered by the system, the power management module may receive the system dormancy request from the interrupt subsystem.

For example, the system in this application may be applied to a mobile phone. If a screen of the mobile phone is on for a long time, and the mobile phone does not receive any input triggered by a user, the interrupt subsystem periodically sends a system dormancy request to the power management module, so that the power management module receives, from the interrupt subsystem, the system dormancy request triggered by the system. If the user does not care about a speed of the dormancy process, the system dormancy request is not a preset dormancy request strongly related to user experience.

It should be noted that, a criterion for determining whether the system dormancy request is a preset dormancy request strongly related to user experience is not limited to the following: A system dormancy request triggered by a user at the application layer is definitely a preset dormancy request, or a system dormancy request automatically sent by the interrupt subsystem is definitely not a preset dormancy request. Whether the system dormancy request is a preset dormancy request is not directly associated with an object that triggers the system dormancy request.

For example, as shown in FIG. 2b, the CPU frequency increasing retention module in the power management module may receive a system dormancy request sent by the application layer, or the CPU frequency increasing retention module may receive a system dormancy request sent by the kernel interrupt subsystem.

Step 12: Increase a frequency of a CPU.

For example, the power management module (for example, the CPU frequency increasing retention module shown in FIG. 2b) shown in FIG. 2c may determine, based on whether the system dormancy request is a preset dormancy request, a target frequency (a maximum operating frequency or an operating frequency with an optimal energy efficiency ratio) to which the frequency of the CPU is to be increased.

In a possible implementation, in a multi-core CPU scenario, the multi-core CPU may be divided into a plurality of groups of CPUs. For example, an 8-core CPU may include two groups of 4-core CPUs, where operating frequencies of CPUs in one group of 4-core CPU are close. In this case, when determining the target frequency to which the frequency of the CPU is to be increased, the CPU frequency increasing retention module may determine a target frequency for an operating frequency of each group of CPUs, and target frequencies of CPUs in one group are the same. For example, the target frequency is a maximum operating frequency corresponding to the group of CPUs, or an operating frequency with an optimal energy efficiency ratio.

In another possible implementation, in a multi-core CPU scenario, an operating frequency of each single-core CPU may be separately controlled. In this case, when determining the target frequency to which the frequency of CPU is to be increased, the CPU frequency increasing retention module may determine a target frequency for each single-core CPU, and target frequencies of single-core CPUs are independent of each other. For example, a target frequency of a single-core CPU is a maximum operating frequency of the single-core CPU, or an operating frequency with an optimal energy efficiency ratio.

It should be noted that, in a multi-core CPU scenario, the multi-core CPU includes one primary-core CPU and at least one secondary-core CPU. In this application, a deactivation sequence and a frequency increasing sequence for different secondary-core CPUs are not limited. However, all secondary-core CPUs are deactivated before the primary-core CPU.

For example, in a dormancy process, for a CPU that needs to be deactivated, before deactivating the CPU, the system in this application may first increase an operating frequency of the CPU, so that the CPU freezes, at a high operating frequency, a task running on the CPU, to accelerate the system dormancy process and shorten duration of the dormancy process.

In a possible implementation, the power management module (for example, the CPU frequency increasing retention module shown in FIG. 2b) shown in FIG. 2c may notify the kernel processing module of information about the CPU whose frequency is to be increased and the target frequency to which the frequency of the CPU is to be increased. The kernel processing module may send an instruction to the primary-core CPU, to increase an operating frequency of the primary-core CPU and/or an operating frequency of the secondary-core CPU to a corresponding target frequency.

For example, the CPU whose frequency is to be increased may include the primary-core CPU and/or the secondary-core CPU. This is not limited in this application.

For example, as shown in FIG. 2c, the primary-core CPU may increase a frequency of the secondary-core CPU. For example, the kernel processing module may send a first instruction to the primary-core CPU, so that the primary-core CPU increases the operating frequency of the secondary-core CPU to a corresponding target frequency.

For example, the kernel processing module may alternatively send a second instruction to the primary-core CPU, so that the primary-core CPU increases the operating frequency of the primary-core CPU to a corresponding target frequency.

The first instruction may be the same as or different from the second instruction. This is not limited in this application. In this implementation, the primary-core CPU may increase the frequency of the secondary-core CPU.

In another implementation, the power management module (for example, the CPU frequency increasing retention module shown in FIG. 2b) may alternatively notify a core device driver module shown in FIG. 2a of information about the CPU whose frequency is to be increased and information about the target frequency to which the frequency of the CPU is to be increased, so that the core device driver module increases an operating frequency of the primary-core CPU and/or an operating frequency of the secondary-core CPU to a corresponding target frequency. For example, the primary-core CPU may also increase the operating frequency of the secondary-core CPU to a corresponding target frequency. For example, the core device driver module may include a driver for a core device.

Step 13: Freeze a task.

For example, after step 12, the power management module (for example, the quick task freezing module shown in FIG. 2b) shown in FIG. 2c may filter tasks in an operating system (for example, all tasks in the operating system) based on a quick task freezing mechanism. For example, the power management module may filter out a common task in a blocked state and a system task (including a user-mode system service task and a kernel-mode system task) from all the tasks in the operating system. In addition, the power management module may control, through the kernel processing module, the primary-core CPU and/or the secondary-core CPU, to freeze a common task that is not in a blocked state and that runs on a corresponding CPU. This can reduce a quantity of tasks to be frozen, to implement quick task freezing.

Optionally, in a possible implementation, in step 13, when the system in this application is applied to an operating system in a kernel architecture, for example, a Linux operating system, the power management module may filter out a task in a blocked state from tasks in the operating system (for example, all tasks in the operating system) based on the quick task freezing mechanism. In addition, the power management module may control, through the kernel processing module, the primary-core CPU and/or the secondary-core CPU, to freeze a task that is not in a blocked state and that runs on a corresponding CPU. In this process, a task in a blocked state does not need to be frozen, so that a quantity of tasks to be frozen can be reduced, to implement quick task freezing.

Step 14: Put a non-core device into dormancy.

For example, after step 13, before the system dormancy process or the system wake-up process shown in FIG. 2b is performed, the power management module (for example, the quick device dormancy module shown in FIG. 2b) shown in FIG. 2c may determine, based on a runtime dormancy and wake-up mechanism, whether a non-core device (for example, a peripheral device) is in a dormant state or an awake state. In this way, in the system dormancy process shown in FIG. 2b, the power management module does not need to traverse peripheral devices in a dormant state. This can reduce a quantity of calls for first callback functions used for device dormancy, and accelerate a device dormancy process. One device may correspond to one first callback function for putting the device into dormancy.

For example, a peripheral module shown in FIG. 2c may include a driver for a corresponding peripheral device. As shown in FIG. 2c, when the power management module puts a peripheral device found through traversal into dormancy, the power management module may call the peripheral module to put the corresponding peripheral device into dormancy. For example, the power management module may call a first callback function for a driver for the corresponding device, to put the corresponding peripheral device into dormancy.

Step 15: Deactivate the secondary-core CPU.

For example, after step 14, the power management module (for example, the quick device dormancy module shown in FIG. 2b) shown in FIG. 2c may prompt the kernel processing module (for example, the secondary core deactivation module shown in FIG. 2b) to deactivate the at least one secondary-core CPU. Certainly, during deactivation of a CPU, information indicated by the power management module to the kernel processing module is not limited to the example herein, and may alternatively include more information. This is not limited herein.

For example, the kernel processing module may freeze all kernel-mode tasks (for example, kernel-mode threads) running on the secondary-core CPU, and control the secondary-core CPU to perform an operation such as deactivation.

Step 16: Put a core device into dormancy.

For example, after step 15, the kernel processing module (for example, the core device dormancy module shown in FIG. 2b) shown in FIG. 2c may put a core device into dormancy (for example, shutdown).

Step 17: Deactivate the primary-core CPU.

For example, after step 16, the kernel processing module (for example, the primary core deactivation module shown in FIG. 2b) shown in FIG. 2c may freeze all kernel-mode tasks (for example, kernel-mode threads) running on the primary-core CPU, and control the primary-core CPU to perform an operation such as deactivation.

In this embodiment, dormancy of the operating system may be implemented through step 11 to step 17, the frequency of the CPU may be increased, and the CPU whose frequency has been increased is used to process an instruction in a dormancy process, to accelerate the system dormancy process. In addition, during task freezing, a task in a blocked state does not need to be frozen, so that a quantity of tasks to be frozen can be reduced. Optionally, a system task may be further filtered out, so that only a common task that is not in a blocked state is frozen. This can further a quantity of tasks to be frozen, and increase a task freezing speed. In addition, during system operation, a device status may be managed based on a status change of a device. Therefore, during dormancy of a non-core device, a quantity of devices to be put into dormancy and to be traversed can be reduced, to accelerate a device dormancy process. Based on the foregoing process, duration of a system dormancy process can be shortened, and a system dormancy speed can be increased, to improve user experience and reduce power consumption.

### Embodiment 2: a system wake-up process

Step 21: Receive a system wake-up request.

For example, as shown in FIG. 2c, the power management module may receive the system wake-up request from the application layer or the kernel interrupt subsystem.

For example, the system dormancy request may be a preset event triggered by the system, or a preset event triggered by a user at the application layer.

A system wake-up method in this application may be applied to a system wake-up scenario of an electronic device such as a mobile phone, or may be applied to a system wake-up scenario of a motor vehicle, or a wake-up scenario of another electronic device. This is not limited in this application.

For example, as shown in FIG. 2c, after the system enters dormancy, the power management module may receive a system wake-up request sent by the application layer, or the power management module may receive a system wake-up request sent by the kernel interrupt subsystem.

For example, when the system wake-up request is triggered by the user at the application layer, the power management module may receive, from the application layer, the system wake-up request triggered by the user.

For example, the system in this application is applied to a mobile phone, and the user may trigger the system wake-up request by touching a lock screen button of the mobile phone. If the user expects quick screen-on, the system wake-up request herein is a preset wake-up request strongly related to user experience.

For example, the system in this application may be applied to a CDC in a motor vehicle scenario. After a system of the CDC of the motor vehicle enters dormancy, a user presses an engine startup button of the motor vehicle. In this case, the power management module may receive a system wake-up request triggered by the user, to wake up an operating system of the motor vehicle. The system wake-up request herein is a preset wake-up request strongly related to user experience.

For example, when the system wake-up request is triggered by the system, the power management module may receive the system wake-up request from the interrupt subsystem.

For example, the system in this application may be applied to a mobile phone. For example, after a mobile phone system enters dormancy, the mobile phone system may periodically send a heartbeat instruction for waking up the system, to perform a related operation. The heartbeat instruction herein is not a preset wake-up request strongly related to user experience, because a user does not care about a speed of the wake-up process. In addition, the user is unaware of the wake-up process.

It should be noted that, a criterion for determining whether the system wake-up request is a preset wake-up request strongly related to user experience is not limited to the following: A system wake-up request triggered by a user at the application layer is definitely a preset wake-up request, or a system wake-up request automatically sent by the interrupt subsystem is definitely not a preset wake-up request. Whether the system wake-up request is a preset wake-up request is not directly associated with an object that triggers the system wake-up request.

Step 22: Activate a primary-core CPU.

For example, as shown in FIG. 2c, the power management module may send the received system wake-up request to the kernel processing module. For example, as shown in FIG. 2b, the primary core activation module in the kernel processing module may receive the system wake-up request (for example, an interrupt signal for waking up the system). As shown in FIG. 2c, the kernel processing module may control the primary-core CPU to perform an operation such as activation.

Step 23: Wake up a core device.

For example, after step 22, the kernel processing module (for example, the core device wake-up module shown in FIG. 2b) shown in FIG. 2c may wake up (for example, turn on) a core device.

Step 24: Activate a secondary-core CPU.

For example, after step 23, the kernel processing module (for example, the secondary core activation module shown in FIG. 2b) shown in FIG. 2c may activate at least one secondary-core CPU.

Step 25: Increase a frequency of the CPU.

For example, after step 24, the power management module (for example, the secondary core frequency increasing retention module shown in FIG. 2b) shown in FIG. 2c may determine, based on whether the system wake-up request received from the application layer or the kernel interrupt subsystem is a preset wake-up request, a target frequency (a maximum operating frequency or an operating frequency with an optimal energy efficiency ratio) to which a frequency of the activated secondary-core CPU is to be increased.

For example, there is at least one activated secondary-core CPU. When there are a plurality of activated secondary-core CPUs, the power management module may determine, for each secondary-core CPU, a target frequency (a maximum operating frequency or an operating frequency with an optimal energy efficiency ratio) to which a frequency of the secondary-core CPU is to be increased; or may determine, for the plurality of secondary-core CPUs, a common target frequency (a maximum operating frequency or an operating frequency with an optimal energy efficiency ratio) to which frequencies of the secondary-core CPUs are to be increased.

For example, when the system wake-up request is a preset wake-up request, the target frequency is a maximum operating frequency of a corresponding secondary-core CPU; or when the system wake-up request is not a preset wake-up request, the target frequency is an operating frequency with an optimal energy efficiency ratio for a corresponding secondary-core CPU.

For example, in the wake-up process, before a non-core device is woken up and a task is unfrozen, an operating frequency of an activated secondary-core CPU may be increased, so that the secondary-core CPU can wake up a non-core device and unfreeze a task at a high operating frequency, to accelerate the system wake-up process and shorten duration of the wake-up process.

In a possible implementation, the power management module (for example, the secondary core frequency increasing retention module shown in FIG. 2b) shown in FIG. 2c may notify the kernel processing module of information about the CPU whose frequency is to be increased and the target frequency to which the frequency of the CPU is to be increased. The kernel processing module may send an instruction to the primary-core CPU, to increase an operating frequency of a corresponding secondary-core CPU to a corresponding target frequency.

For example, as shown in FIG. 2c, the primary-core CPU may increase a frequency of the secondary-core CPU. For example, the kernel processing module may send a first instruction to the primary-core CPU, so that the primary-core CPU increases the operating frequency of the secondary-core CPU to a corresponding target frequency.

In another implementation, the power management module (for example, the secondary core frequency increasing retention module shown in FIG. 2b) may alternatively notify a core device driver module shown in FIG. 2a of information about the CPU whose frequency is to be increased and the target frequency to which the frequency of the CPU is to be increased, so that the core device driver module increases an operating frequency of a corresponding secondary-core CPU to a corresponding target frequency.

An execution principle of step 25 is similar to that of step 12 in the dormancy process, and details are not described herein again.

Step 26: Wake up a non-core device.

For example, after step 25, before the system dormancy process or the system wake-up process shown in FIG. 2b is performed, the power management module (for example, the quick device wake-up module shown in FIG. 2b) shown in FIG. 2c may determine, based on a runtime dormancy and wake-up mechanism, whether a non-core device (for example, a peripheral device) is in a dormant state or an awake state. In this way, in the system wake-up process shown in FIG. 2b, the power management module does not need to traverse peripheral devices in an awake state. This can reduce a quantity of calls for second callback functions used for device wake-up, and accelerate a device wake-up process. One device may correspond to one second callback function for waking up the device.

For example, a peripheral module shown in FIG. 2c may include a driver for a corresponding peripheral device. As shown in FIG. 2c, when the power management module wakes up a peripheral device found through traversal, the power management module may call the peripheral module to wake up the corresponding peripheral device. For example, the power management module may call a second callback function for a driver for the corresponding device, to wake up the corresponding peripheral device.

Step 27: Unfreeze a task.

For example, after step 26, the power management module (for example, the task unfreezing module shown in FIG. 2b) shown in FIG. 2c may unfreeze a task in a frozen state through the kernel processing module, to resume operation of the corresponding task.

For example, the task in the frozen state herein is not in a blocked state when the task is frozen.

For example, the task in the frozen state herein is a common task.

For example, the task to be unfrozen herein may be the task frozen in step 13 in Embodiment 1.

Step 28: Cancel frequency increasing for the CPU. This step is optional.

For example, after step 26, after a task is unfrozen, the power management module (for example, the CPU frequency increasing cancellation module shown in FIG. 2b) shown in FIG. 2c may restore a frequency adjustment policy for the CPU to an original frequency adjustment policy, where the original frequency adjustment policy is a frequency adjustment policy used for the CPU before the system wake-up request is received.

For example, the CPU herein is a CPU whose frequency has been increased according to the frequency increasing policy in this application in a system dormancy or wake-up process, and may be a primary-core CPU or a secondary-core CPU. This is not limited in this application.

For example, the original frequency adjustment policy for the CPU is not limited in this application. The original frequency adjustment policy is a frequency adjustment policy used for the CPU before a frequency increasing operation in this application in a system dormancy or wake-up process is performed.

For example, the original frequency adjustment policy may be a fixed frequency adjustment policy. To be specific, the operating frequency of the CPU is adjusted to a fixed operating frequency configured in the policy. For example, the original frequency adjustment policy may alternatively be a dynamic frequency adjustment policy. To be specific, the operating frequency of the CPU is flexibly adjusted based on a task running on the CPU.

For example, when determining that an operating frequency of a corresponding secondary-core CPU needs to be adjusted, the power management module may notify the kernel processing module shown in FIG. 2c of a frequency to which the operating frequency of the secondary-core CPU is to be adjusted. In this case, the kernel processing module may prompt the primary-core CPU to adjust the operating frequency of the secondary-core CPU, or the kernel processing module may prompt the secondary-core CPU to adjust the operating frequency of the secondary-core CPU. This is not limited in this application.

In this embodiment, wake-up of the operating system may be implemented through step 21 to step 28, the frequency of the CPU may be increased, and the CPU whose frequency has been increased is used to process an instruction in a wake-up process, to accelerate the system wake-up process. In addition, during system operation, a device status may be managed based on a status change of a device. Therefore, during wake-up of a non-core device, a quantity of devices to be woken up and to be traversed can be reduced, to accelerate a device wake-up process. Based on the foregoing process, duration of a system wake-up process can be shortened, and a system wake-up speed can be increased, to improve user experience and reduce power consumption.

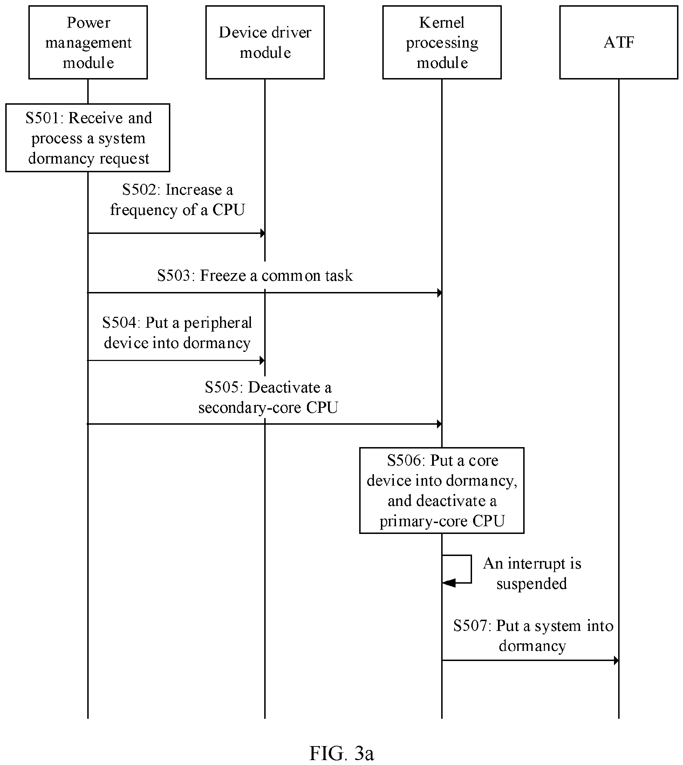

FIG. 3a is an example schematic diagram of a system dormancy process.

In FIG. 3a, an application scenario is a CDC of a motor vehicle. In this example, the CDC is divided into an instrument domain and an entertainment domain. The instrument domain is in a microkernel architecture (for example, the microkernel architecture shown in FIG. 2a). A system in this application may run on an embedded platform.

As shown in FIG. 3a, the system dormancy process may include the following steps.

S501: A power management module receives and processes a system dormancy request.

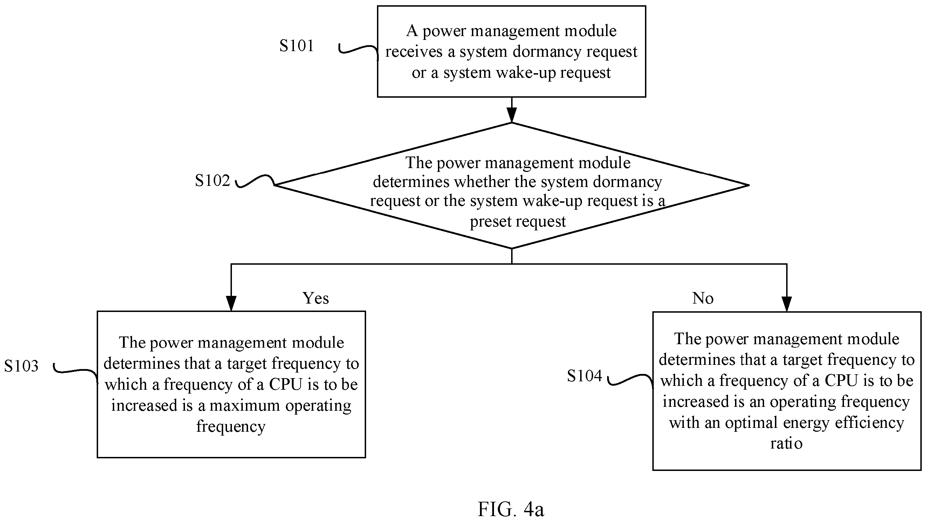

For example, the power management module may implement S501 by using a precise CPU frequency increasing mechanism with reference to an implementation process shown in FIG. 4a.

For example, as shown in FIG. 4a, a process of implementing the precise CPU frequency increasing mechanism by the power management module may include the following steps.

S101: The power management module receives a system dormancy request.

S102: The power management module determines whether the system dormancy request is a preset request.

For example, if a user presses a dormancy button on a display of the motor vehicle, the power management module may receive, from an application layer, a system dormancy request triggered by the user, to put an operating system of the motor vehicle into dormancy. The system dormancy request herein is a preset dormancy request strongly related to user experience.

For example, if the motor vehicle does not move for a long time, and the user does not perform any operation on the display of the motor vehicle for a long time, the power management module may receive a system dormancy request sent by the interrupt subsystem shown in FIG. 2c, to put the system of the motor vehicle into dormancy. The system dormancy request herein is not a preset dormancy request strongly related to user experience.

For example, the system dormancy request may be in a form of an event. In this case, the power management module may configure a first preset event indicating a preset dormancy request. When a triggered system dormancy event is the first preset event, S103 may be performed. When a triggered system dormancy event is not the first preset event, S104 may be performed.

S103: When detecting that the system dormancy request is a preset request, the power management module may determine that a target frequency to which a frequency of a CPU is to be increased is a maximum operating frequency.

For example, the preset request may include a preset dormancy request.

For example, after the user presses the dormancy button on the display of the motor vehicle, the user expects the system of the motor vehicle to enter a dormant state as soon as possible. In this case, the power management module may determine a CPU whose frequency is to be increased and a target frequency to which the frequency of the CPU is to be increased. Herein, the target frequency is a maximum operating frequency of the CPU.

For example, a maximum operating frequency of each single-core CPU or each group of CPUs (including a multi-core CPU) may be configured on the power management module.

S104: When detecting that the system dormancy request is not a preset request, the power management module may determine that a target frequency to which a frequency of a CPU is to be increased is an operating frequency with an optimal energy efficiency ratio.

For example, if the motor vehicle does not move for a long time, and the user does not perform any operation on the display of the motor vehicle for a long time, the power management module may receive a system dormancy request sent by the interrupt subsystem shown in FIG. 2c, to put the system of the motor vehicle into dormancy. The power management module detects that the system dormancy request herein is not a preset dormancy request strongly related to user experience, and may determine a CPU whose frequency is to be increased and determine that a target frequency to which the frequency of the CPU is to be increased is an operating frequency with an optimal energy efficiency ratio for the CPU.

For example, an operating frequency with an optimal energy efficiency ratio for each CPU is strongly related to hardware of the CPU. The operating frequency with an optimal energy efficiency ratio for each CPU may be determined based on power consumption test data of a CPU of a specific chip platform at different operating frequencies.

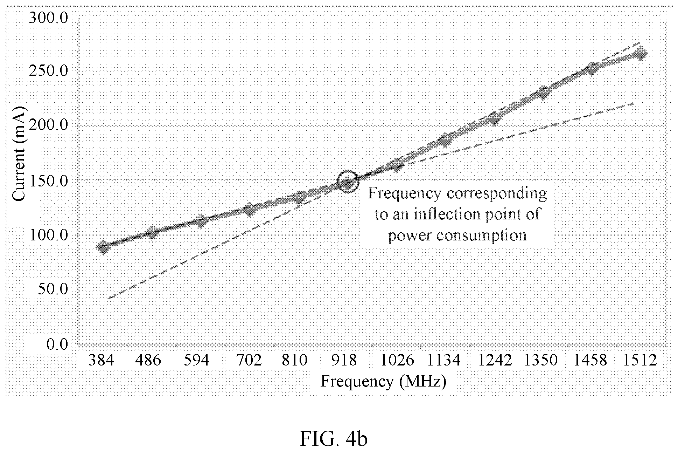

FIG. 4b is an example line graph of test data of an operating frequency of a CPU and a current of a battery.

As shown in FIG. 4b, an operating frequency with an optimal energy efficiency ratio is a frequency (for example, 918 MHz herein) corresponding to an inflection point of power consumption, and is indicated by a circle in FIG. 4b.

It should be noted that values in a horizontal axis and a vertical axis in FIG. 4b are not intended to limit the present invention. Herein, the power consumption test data is merely shown as an example, but is not intended to limit this application. In addition, a specific value of a current at each operating frequency in FIG. 4b is not limited in this application.

For example, an operating frequency with an optimal energy efficiency ratio for each CPU in the system may be priori data, and an operating frequency with an optimal energy efficiency ratio for each single-core CPU or each group of CPUs (including a multi-core CPU) may be configured on the power management module.

S502: The power management module increases a frequency of a CPU through a device driver module.

For example, the device driver module in FIG. 3a may include the core device driver module shown in FIG. 2a.

For example, the power management module may notify the core device driver module in the device driver module of information about a CPU whose frequency is to be increased and information about a target frequency (a maximum operating frequency or an operating frequency with an optimal energy efficiency ratio) to which the frequency of the CPU is to be increased, so that the core device driver module increases an operating frequency of a primary-core CPU and/or an operating frequency of a secondary-core CPU to a corresponding target frequency.

For example, when the system dormancy request is related to user experience (for example, the system dormancy request is a preset dormancy request), the system in this application may increase the operating frequency of the CPU to a maximum operating frequency of the CPU, to ensure user experience in the system dormancy process to a maximum extent; or when the system dormancy request is not related to user experience (for example, the system dormancy request is not a preset dormancy request), the system in this application may adjust the operating frequency of the CPU to an operating frequency with an optimal energy efficiency ratio, to reduce power consumption of the CPU to a maximum extent.

For specific implementation details of S501 and S502, refer to step 11 and step 12 in Embodiment 1. Principles are similar, and details are not described herein again.

S503: The power management module freezes a common task through a kernel processing module.

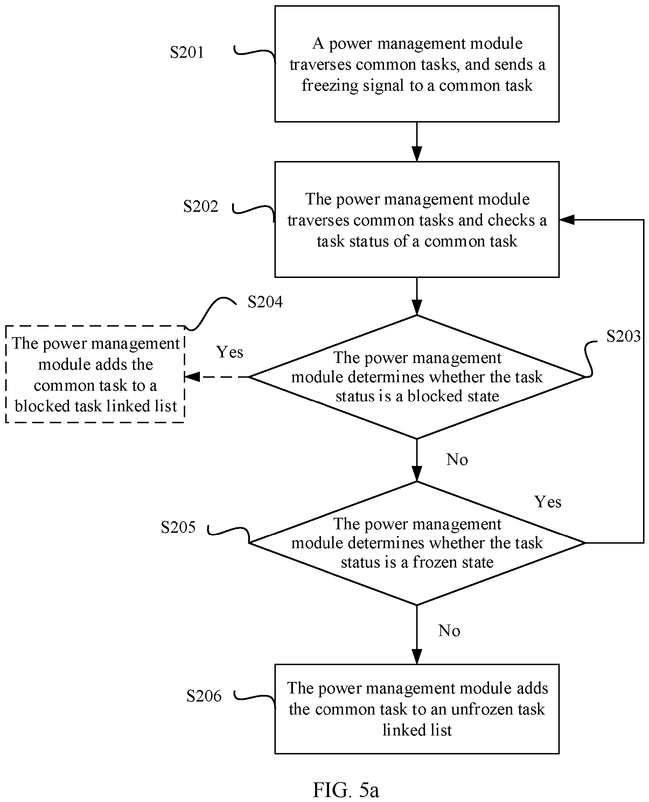

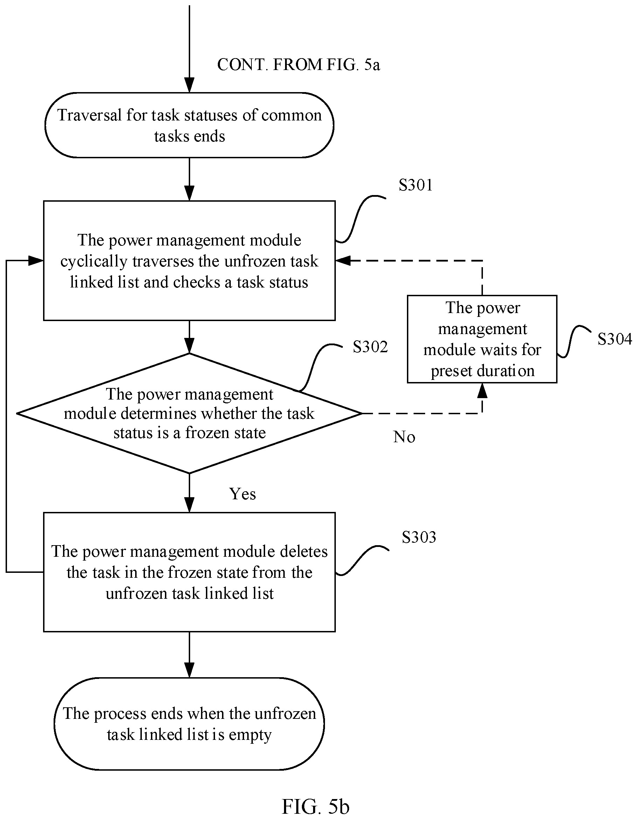

For example, the power management module may implement S503 by using a quick task freezing mechanism with reference to implementation processes shown in FIG. 5a and FIG. 5b.

For example, as shown in FIG. 5a, a process of implementing the quick task freezing mechanism by the power management module may include the following steps.

S201: The power management module traverses common tasks, and sends a freezing signal to a common task.

For example, in the microkernel architecture, the power management module may traverse system tasks in the system for filtering, and then traverse only common tasks without traversing system tasks (which may include a user-mode system service task and a kernel-mode system task), and send a freezing signal to a common task found through traversal, so that each common task in the system can receive the freezing signal for freezing the common task.

For example, in a kernel architecture (for example, a Linux operating system), the power management module does not need to filter system tasks, but only needs to filter tasks (including a system task and a common task) in a blocked state, so that a task freezing process can be accelerated. Other processes related to task freezing are similar to task freezing processes described in embodiments of this application, and details are not described herein again.

For example, a common task and a system task are two types of tasks, and may be distinguished and identified by task identifiers.

For example, after a common task receives a freezing signal, optionally, the common task may mark the common task as a frozen state. After the common task receives the freezing signal or the common task has the mark indicating a frozen state, the common task may freeze itself when the common task is not in a blocked state. During freezing of the common task, the common task may send a freezing instruction to the CPU, and the CPU executes the freezing instruction to freeze the common task, so that a status (for example, a running state) of the common task is updated to a frozen state.

Optionally, for example, a common task is writing data when the common task receives a freezing signal. In this case, the common task may send a freezing instruction to the CPU after the common task completes the current data write operation, to freeze the common task.

S202: The power management module traverses common tasks and checks a task status of a common task.

For example, after S202, the power management module may continue to traverse all common tasks in the system, and check a task status of a common task found through traversal.

S203: The power management module determines whether the task status is a blocked state.

Optionally, if the power management module detects that the task status is a blocked state, the power management module performs S204.

Optionally, in S204, the power management module adds the common task in the blocked state to a blocked task linked list.

For example, that a task is in a blocked state indicates that the task is waiting for execution. In this case, the task in the blocked state is not in a running state. To shorten duration of task freezing, the system in this application does not need to freeze the common task in the blocked state.

Optionally, the power management module may alternatively filter out the common task in the blocked state, without storing the common task in a data structure (for example, the blocked task linked list).

For example, a task freezing filter may be implemented in the power management module, and the power management module may filter out a task in a blocked state from common tasks through the task freezing filter, to accelerate a task freezing process. Optionally, the power management module may add, to the blocked task linked list (a type of linked list), a task that is in a blocked state and that is found through filtering.

For example, there may be a large quantity of tasks in a blocked state in the system, and therefore a quantity of tasks in a blocked state accounts for a large proportion. Considering that a task in a blocked state does not participate in task scheduling, the system in this application may filter out a task in a blocked state, without determining whether the task in the blocked state is in a frozen state or freezing the task in the blocked state. This can greatly improve overall task freezing efficiency and accelerate a task freezing process.

Optionally, the power management module may send a freezing signal to all common tasks. In this case, a task in a blocked state among common tasks can also receive the freezing signal. If a status of the task in the blocked state is switched to a non-blocked state before the step of putting a non-core device (for example, a peripheral) into dormancy is performed, because the task has received the freezing signal, the task may first process the freezing signal, so that the task enters a frozen state. This can avoid a case that, after the task in the blocked state is switched to the non-blocked state, the task is not frozen, affecting system dormancy.

Before the system puts a non-core device into dormancy (for example, before S504 in FIG. 3a is performed), a task in a blocked state (for example, a task added to the blocked task linked list) may switch to a non-blocked state (for example, is woken up). As a result, the originally blocked task is run. To prevent this case, optionally, in this embodiment of this application, before the secondary-core CPU is deactivated, the kernel processing module does not migrate a timer (timer) on the secondary-core CPU or a task on the secondary-core CPU to another activated CPU.

In this way, a task that is in the blocked task linked list and that runs on the secondary-core CPU is not migrated to a running CPU. In this case, after the secondary-core CPU is deactivated, a task, on the secondary-core CPU, that belongs to the blocked task linked list is not performed even if the task is updated from a blocked state to a non-blocked state. This ensures that, before a non-core device is put into dormancy, even if a status of a task in a blocked state in the blocked task linked list is updated to a non-blocked state, the task still enters a frozen state based on a received freezing signal, and cannot run. For example, a task of a timer on the secondary-core CPU is in a blocked state, and is added to a blocked task linked list. After timing of the timer ends, a task corresponding to the timer may send an interrupt to the secondary-core CPU. However, because the secondary-core CPU is deactivated and the task corresponding to the timer is not migrated to another running CPU, after entering a kernel, the system no longer receives an interrupt initiated by the task on the deactivated secondary-core CPU, and therefore does not perform a task that is woken up after being blocked. This ensures correct unfreezing of a blocked task.

Optionally, before performing the step of deactivating the secondary-core CPU, for example, before performing S505 in FIG. 3a, the power management module may check a task status of a task in the blocked task linked list, and determine whether the blocked task linked list includes a task in a running state. For example, for a task in a blocked state in the blocked task linked list, before the secondary-core CPU is deactivated, the task is woken up and switches from the blocked state to a running state. Although the task in the blocked state has received a freezing signal in advance, the task in the blocked state still runs. As a result, the blocked task linked list includes a task that fails to be frozen after being woken up. In this case, a current dormancy process fails, and a system dormancy process may be performed again (for example, S501 in FIG. 3a is performed again, and the power management module re-processes a received system dormancy request and performs subsequent steps). On the contrary, if the blocked task linked list does not include a task in a running state, it indicates that the system can be frozen, and the step of deactivating the secondary-core CPU in FIG. 3a is further performed. In actual application, a case in which the blocked task linked list includes a task that fails to be frozen after being woken up is rare. This embodiment may serve as a solution for exception handling and ensuring reliability of system dormancy.

In addition, it should be noted that, in the embodiment of FIG. 5a in this application, the power management module first traverses common tasks and sends a freezing signal to a common task, and then the power management module filters out a task in a blocked state from common tasks (herein, the task is added to the linked list). In another embodiment, the power management module may alternatively first filter out a task in a blocked state from common tasks, and add the task in the blocked state to a linked list, and then the power management module may traverse common tasks (including a task in the blocked task linked list), and send a freezing signal. An execution sequence of the step of filtering out a task in a blocked state and the step of sending a freezing signal to a common task is not limited in this application.

After S203, if the power management module detects that the task status is not a blocked state, the power management module may perform S205.

S205: The power management module determines whether a task status of the task that is not in a blocked state is a frozen state.

For example, for a common task in a non-blocked state (for example, a task status is not a blocked state), the power management module may determine whether the common task is frozen.

After S205, if the power management module detects that the task status of the task that is not in a blocked state (for example, the task status is not a blocked state) is a frozen state, S202 is performed, and the power management module continues to determine, through traversal, a task status of a next common task.

For example, if the power management module detects that the common task in the non-blocked state is frozen (to be specific, a task status is a frozen state), the power management module may continue to determine, through traversal, a task status of a next common task, to filter out a task that is in a blocked state and that is found through traversal, or determine whether a task that is in a non-blocked state and that is found through traversal is in a frozen state.

After S205, if the power management module detects that the task status of the task that is not in a blocked state is not a frozen state, the power management module performs S206.

S206: The power management module adds the common task to an unfrozen task linked list.

For example, if the common task found by the power management module through traversal is neither in a blocked state nor in a frozen state, it indicates that, after the freezing signal is sent to the common task in S201, the common task has not processed the freezing signal to freeze the task.

For example, if the common task is performing a data write operation when receiving the freezing signal, the common task is still in a running state before the data write operation is completed. Alternatively, the CPU is in a busy state, and therefore the CPU has not executed a freezing instruction sent to the CPU by the common task that has received the freezing signal.

In this case, the power management module may add the common task that is neither in a blocked state nor in a frozen state to the unfrozen task linked list (a type of linked list).

For example, the unfrozen task linked list is different from the blocked task linked list. For example, the unfrozen task linked list may be used to cache a common task that is neither in a frozen state nor in a blocked state. For example, the blocked task linked list may be used to cache a common task in a blocked state.

For example, after the power management module finishes traversing task statuses of common tasks (for example, the traversal process of S202 in FIG. 5a ends) during execution of the process in FIG. 5a, as shown in FIG. 5b, a process of implementing the quick task freezing mechanism by the power management module may further include the following steps.

S301: The power management module cyclically traverses the unfrozen task linked list and checks a task status.

For example, the power management module may cyclically traverse the unfrozen task linked list and check a task status within preset duration, to avoid a case that a task in the unfrozen task linked list remains unfrozen for a long time, affecting a system dormancy speed.

S302: The power management module determines whether the task status is a frozen state.

After S302, if the power management module detects that the task status is a frozen state, S303 is performed.

S303: The power management module deletes the task in the frozen state from the unfrozen task linked list.

After S303, if the unfrozen task linked list is not empty, the power management module continues to perform S301, so that the power management module continues to traverse a next task in the unfrozen task linked list until the unfrozen task linked list is empty, and then the process ends.

In this case, if the unfrozen task linked list still includes a task, S301 may be cyclically performed until the unfrozen task linked list is empty, to be specific, all common tasks in a non-blocked state are frozen and are in a frozen state.

In this embodiment of this application, the power management module may add, to the unfrozen task linked list, a non-blocked and unfrozen common task that is found through traversal. After the power management module traverses task statuses of all common tasks once, the power management module may cyclically traverse task statuses of tasks in the unfrozen task linked list, until all tasks in a non-blocked state in the unfrozen task linked list are frozen. When the power management module cyclically traverses the unfrozen task linked list and finds that a task in the unfrozen task linked list is in a frozen state, the power management module may delete the task from the unfrozen task linked list. In this way, in a process of cyclically traversing the unfrozen task linked list by the power management module, the unfrozen task linked list gradually becomes shorter. This can avoid redundant check on task statuses of a large quantity of frozen tasks. When the power management module checks whether a status of a task is a frozen state, efficiency of the traversal and check process is greatly improved, so that task freezing efficiency can be improved.

Optionally, after S302, if the power management module detects that the task status is not a frozen state, S304 is performed.

Optionally, in S304, the power management module waits for preset duration.

After S304, the power management module performs S301, so that the power management module continues to traverse a next task in the unfrozen task linked list until the unfrozen task linked list is empty, and then the process ends.

For example, when the power management module traverses the unfrozen task linked list and detects that a task in the unfrozen task linked list is not in a frozen state, the power management module may wait for preset duration (for example, 10 milliseconds), and then perform S301 after a delay of the preset duration. In this case, within the preset duration delayed by the power management module, a CPU for executing an instruction of the power management module may be idle, so that the CPU can execute a freezing instruction for a task in the unfrozen task linked list, to freeze the task.

It should be noted that the preset duration may be flexibly configured based on an application scenario, and is not limited to the example of 10 milliseconds herein.

For example, a unit of the preset duration may be milliseconds.

It can be understood that S304 is mainly intended to ensure reliability of system dormancy. In an actual application scenario, after S302, S303 may be performed, but S304 is seldom performed.

In the microkernel architecture, when performing a system dormancy process, the system in this application may filter out system tasks (including a user-mode system service task and a kernel-mode system task), and freeze only a user-mode common task. For example, a quantity of driver-related system tasks is large, and is approximately 200. System tasks are filtered out, and only a common task is frozen, so that a quantity of tasks to be frozen can be greatly reduced. In addition, some system tasks serve common tasks. Therefore, after the common tasks are frozen, the system tasks can no longer run, and the system tasks are not scheduled. In this case, system tasks are filtered out during task freezing, so that a quantity of freezing operations for unscheduled tasks can be reduced, to reduce a quantity of unnecessary task freezing operations. In addition, other system tasks are used to perform subsequent operations for system dormancy, for example, operations of putting a device into dormancy and deactivating a CPU. In this case, these system tasks do not need to be frozen either. Therefore, in the microkernel architecture, the secondary-core CPU may be deactivated during system dormancy. In this case, execution of a task on the secondary-core CPU stops, so that only a system task (for example, used to deactivate the secondary-core CPU) running on the primary-core CPU remains. In this case, when an execution stage of the system dormancy process enters the kernel mode, a system task on the secondary-core CPU is no longer scheduled. The system in this application does not need to freeze a system task, and only needs to freeze a common task, so that a quantity of tasks to be frozen can be reduced.

In a possible implementation, the system in this application may use highest priority guarantee of a stop machine (stop machine) mechanism, to avoid a stability problem (for example, a deadlock) during execution of a remaining task (for example, a driver-related system task) in the system after the secondary-core CPU is deactivated.

S504: The power management module puts a peripheral device into dormancy through the device driver module.

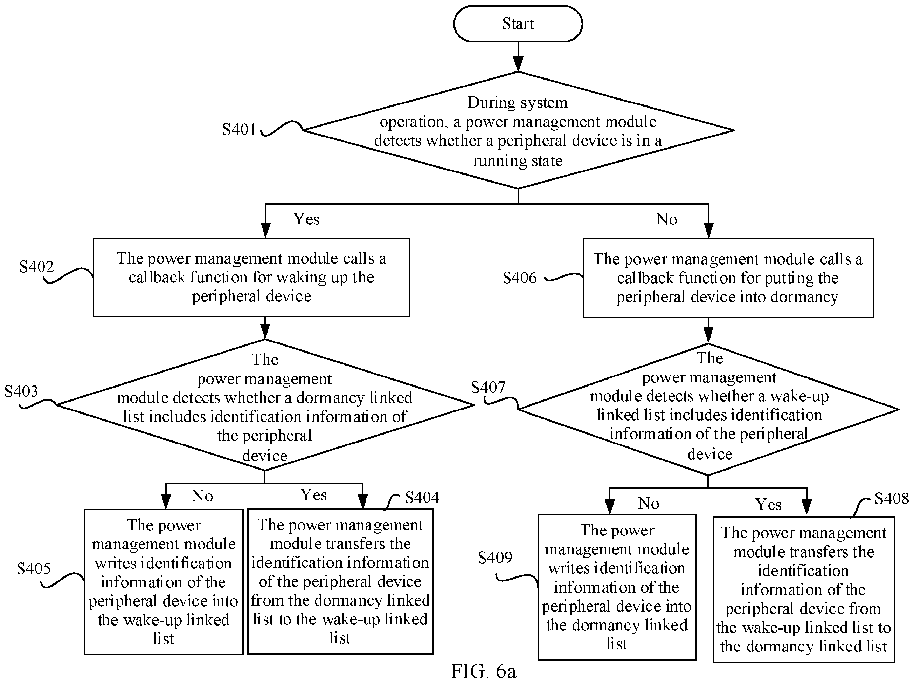

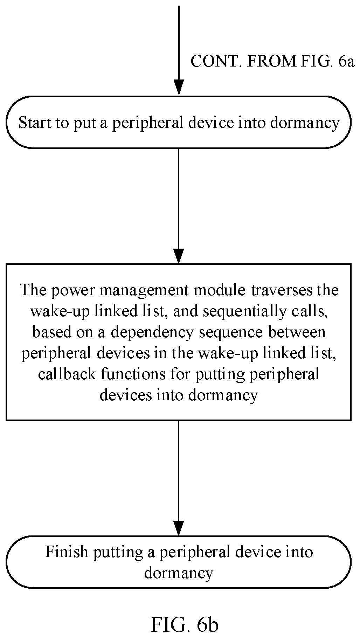

For example, FIG. 6a shows an example of an implementation process of a runtime dormancy and wake-up mechanism implemented by the power management module. The power management module may implement S504 through a process of putting a peripheral device into dormancy in FIG. 6b with reference to the runtime dormancy and wake-up mechanism implemented in FIG. 6a.

For example, the device driver module may include the peripheral module shown in FIG. 2a, to put a peripheral device into dormancy or wake up a peripheral device.

For example, as shown in FIG. 6a, a process of implementing the runtime dormancy and wake-up mechanism by the power management module may include the following steps.

S401: During system operation, the power management module detects whether a peripheral device is in a running state.

For example, S401 may be performed when the power management module needs to periodically traverse peripheral devices. Alternatively, S401 may be performed when the power management module needs to detect a status of a peripheral device. This avoids a new step of detecting an operating status of a peripheral device periodically or as scheduled, to reduce signaling overheads.

For example, the power management module may generate two linked lists after power-on. A linked list 1 is a dormancy linked list for caching information about a peripheral device in a dormant state (the information is used to identify the peripheral device, for example, is a device identifier). A linked list 2 is a wake-up linked list for caching information about a peripheral device in a running state (the information is used to identify the peripheral device, for example, is a device identifier). After power-on, initial linked lists 1 and 2 are both empty linked lists.

In addition, during device dormancy or wake-up, there is a sequence dependency relationship between devices. Therefore, a sequence dependency relationship between peripheral devices needs to be recorded in the power management module.

For example, the power management module may record a sequence dependency relationship between peripheral devices in each of the linked list 1 and the linked list 2, for example, use a device sequence number to represent a sequence dependency relationship between devices.

For example, operation of a device A depends on a device B. In this case, during system dormancy, the device A is first put into dormancy, and then the device B is put into dormancy. In this case, in the dormancy linked list, a device sequence number of the device A is 1, and a device sequence number of the device B is 2, where a device identifier of the device A is A, and a device identifier of the device B is B.

For example, operation of a device A depends on a device B. In this case, during system wake-up, the device B is first woken up, and then the device A is woken up. In this case, in the wake-up linked list, a device sequence number of the device B is 1, and a device sequence number of the device A is 2, where a device identifier of the device A is A, and a device identifier of the device B is B.

For example, when identification information of dormant peripheral devices is stored in the linked list 1, the identification information may be sorted and stored according to device sequence numbers.

For example, when identification information of woken-up peripheral devices is stored in the linked list 2, the identification information may be sorted and stored according to device sequence numbers.

In a possible implementation, when the power management module detects that the peripheral device is in a running state, S402 may be performed.

Optionally, in S402, the power management module calls a callback function for waking up the peripheral device.

Optionally, in S403, the power management module detects whether the dormancy linked list includes identification information of the peripheral device.

After S403, if the power management module detects that the dormancy linked list does not include identification information of the peripheral device, S405 is performed.

S405: The power management module writes identification information of the peripheral device into the wake-up linked list.

After S403, if the power management module detects that the dormancy linked list includes identification information of the peripheral device, S404 is performed.

S404: The power management module transfers the identification information of the peripheral device from the dormancy linked list to the wake-up linked list.

In this embodiment, during system operation, if the power management module detects that any peripheral device is in a running state, the power management module may call a callback function, in the peripheral module, that is used for waking up the peripheral device, to wake up the peripheral device. In addition, the power management module may further record identification information of the peripheral device in the wake-up linked list. For example, when the dormancy linked list does not record identification information of the peripheral device, the identification information of the peripheral device may be written into the wake-up linked list. For example, the dormancy linked list already records identification information of the peripheral device, the identification information of the peripheral device may be transferred from the dormancy linked list to the wake-up linked list. In addition, the power management module may sort, in the wake-up linked list, locations of peripheral devices according to device sequence numbers of the peripheral devices, to perform peripheral dormancy based on the locations of the peripheral devices in the wake-up linked list and a sequence dependency relationship between the peripheral devices.

In a possible implementation, when the power management module detects that the peripheral device is not in a running state, S406 may be performed.

Optionally, in S406, the power management module calls a callback function for putting the peripheral device into dormancy.

Optionally, in S407, the power management module detects whether the wake-up linked list includes identification information of the peripheral device.

After S407, if the power management module detects that the wake-up linked list does not include identification information of the peripheral device, S409 is performed.

S409: The power management module writes identification information of the peripheral device into the dormancy linked list.

After S407, if the power management module detects that the wake-up linked list includes identification information of the peripheral device, S408 is performed.

S408: The power management module transfers the identification information of the peripheral device from the wake-up linked list to the dormancy linked list.

In this embodiment, during system operation, if the power management module detects that any peripheral device is not in a running state, the power management module may call a callback function, in the peripheral module, that is used for putting the peripheral device into dormancy, to put the peripheral device into dormancy. In addition, the power management module may further record identification information of the peripheral device in the dormancy linked list. For example, when the wake-up linked list does not record identification information of the peripheral device, the identification information of the peripheral device may be written into the dormancy linked list. For example, the wake-up linked list already records identification information of the peripheral device, the identification information of the peripheral device may be transferred from the wake-up linked list to the dormancy linked list. In addition, the power management module may sort, in the dormancy linked list, locations of peripheral devices according to device sequence numbers of the peripheral devices, to perform peripheral wake-up based on the locations of the peripheral devices in the dormancy linked list and a sequence dependency relationship between the peripheral devices.

For example, when the power management module receives the system dormancy request and proceeds to the peripheral dormancy stage in the system dormancy process, as shown in FIG. 6b, when starting to put a peripheral device into dormancy, the power management module may traverse the wake-up linked list, and sequentially call, based on a dependency sequence (namely, the sequence dependency relationship) between peripheral devices in the wake-up linked list, callback functions for putting peripheral devices into dormancy, to turn off a peripheral device in a running state, so as to put the peripheral into dormancy.

Optionally, after the power management module calls a callback function for putting a peripheral device into dormancy to put the peripheral into dormancy, the peripheral is in a dormant state. In this case, a device identifier of the peripheral may be written into the dormancy linked list, or a device identifier of the peripheral may be transferred from the wake-up linked list to the dormancy linked list. This ensures integrity of data recorded in the dormancy linked list or the wake-up linked list.

Before the peripheral dormancy step in the system dormancy process is performed, dormancy processes of some peripherals have been completed during system operation. In this case, during peripheral dormancy in the system dormancy process, the power management module does not need to traverse a dormant peripheral device or call a callback function for putting the peripheral device into dormancy, but only needs to call a corresponding callback function for putting a peripheral device (for example, a peripheral device in a running state), other than the dormant peripheral device, into dormancy. This can greatly reduce a quantity of calls for callback functions for putting peripherals into dormancy, and no dormancy operation needs to be performed on a dormant peripheral again, so that a peripheral dormancy speed can be increased.

In another implementation, a process of implementing the runtime dormancy and wake-up mechanism by the power management module may be partially different from the solution in FIG. 6a.

In this implementation, the power management module may generate a linked list 3 during initialization after power-on. After a host is powered on, the power management module may store identification information (or other information that can be used to identify a peripheral device) of all peripheral devices connected to the host. In addition, status information (a dormant state or an awake state) of the peripheral devices may be identified in the linked list 3. For example, that a device is in a dormant state may be that the device is not in a running state (for example, is in a shut-down state). That a device is in an awake state may be that the device is in a running state. A main difference between this implementation and the embodiment of FIG. 6a lies in that, in this embodiment, all peripheral devices may be maintained in one linked list, and whether a peripheral device is in a running state may be identified in the linked list to achieve same effect as that of two linked lists (for example, the dormancy linked list and the wake-up linked list). To be specific, during system operation, a dormant or awake state of a peripheral device is recorded. Therefore, in the system dormancy or wake-up process, a peripheral device (for example, a peripheral device in a running state) other than a dormant peripheral device may be traversed and put into dormancy, to reduce a quantity of peripheral devices to be put into dormancy; or a peripheral device (for example, a peripheral device in a shut-down state) other than a woken-up peripheral device may be traversed and woken up, to reduce a quantity of peripheral devices to be woken up, so as to shorten duration of putting a peripheral device into dormancy or waking up a peripheral device.

Optionally, in the system dormancy or wake-up process, after a peripheral is put into dormancy or woken up, a status (a dormant state or an awake state) of the peripheral may be updated to the linked list 3.

In addition, during device dormancy or wake-up, there is a sequence dependency relationship between devices. Therefore, a sequence dependency relationship between peripheral devices further needs to be recorded in the power management module. A specific implementation principle may be similar to that in the embodiment of FIG. 6a, and details are not described herein again.

For example, during device initialization upon startup of the operating system, the power management module may generate a linked list 3 including identifiers of all peripheral devices sorted according to device sequence numbers. Optionally, during device initialization, the power management module may mark, based on a started peripheral device, a status of the peripheral device in the linked list 3 as an awake state, and mark a status of a non-started peripheral device in the linked list 3 as a dormant state.

During system operation, the power management module may check whether a peripheral device is in a running state. For example, the power management module may perform the checking step when the power management module needs to periodically traverse peripheral devices. Alternatively, the power management module may perform the checking step when the power management module needs to detect a status of a peripheral device. This avoids a new step of detecting an operating status of a peripheral device periodically or as scheduled, to reduce signaling overheads.

After detecting that a status of a peripheral device is a running state or is not a running state, the power management module may determine, based on a status detection result for the peripheral device, whether to update a status of the corresponding peripheral device in the linked list 3.

For example, a device 1 (a peripheral) is marked as a dormant state in the linked list 3. During system operation, the power management module detects that the device 1 is in a running state. In this case, the power management module may update a status of the device 1 in the linked list 3 from the dormant state to an awake state (or a running state). Optionally, the power management module may call, for a driver for the device 1, a callback function for wake-up, to wake up the device 1.

For another example, the device 1 is marked as an awake state in the linked list 3. During system operation, the power management module detects that the device 1 is in a running state. In this case, the power management module does not need to update a status of the device 1 in the linked list 3.

For still another example, the device 1 is marked as an awake state in the linked list 3. During system operation, the power management module detects that the device 1 is in a shut-down state. In this case, the power management module may update a status of the device 1 in the linked list 3 from the awake state to a dormant state. Optionally, the power management module may call, for the driver for the device 1, a callback function for dormancy, to put the device 1 into dormancy.

Therefore, in this implementation, for example, when the power management module receives the system dormancy request, proceeds to the peripheral dormancy stage in the system dormancy process, and starts to put a peripheral device into dormancy, the power management module may traverse the example linked list 3 to determine at least one peripheral device in an awake state, and sequentially call, based on a sequence dependency relationship corresponding to the at least one peripheral device, a callback function for putting the at least one peripheral device into dormancy, to turn off a peripheral device in a running state, so as to put the peripheral into dormancy. Before the peripheral dormancy step in the system dormancy process is performed, dormancy processes of some peripherals have been completed during system operation. In this case, during peripheral dormancy in the system dormancy process, the power management module does not need to traverse a dormant peripheral device or call a callback function for putting the peripheral device into dormancy, but only needs to call a corresponding callback function for putting a peripheral device in a running state into dormancy. This can greatly reduce a quantity of calls for callback functions for putting peripherals into dormancy, and no dormancy operation needs to be performed on a dormant peripheral again, so that a peripheral dormancy speed can be increased.

Still as shown in FIG. 3a, after S504, in S505, the power management module deactivates the secondary-core CPU through the kernel processing module.

For example, an implementation principle of S505 is similar to that of step 15 in Embodiment 1, and details are not described herein again.

In this embodiment, during system dormancy, the secondary-core CPU may be deactivated. During deactivation of the secondary-core CPU, no timer or task is migrated, and the highest priority guarantee of the stop machine mechanism is used to avoid a problem that execution of a system task is unstable after the secondary-core CPU is deactivated.

Still as shown in FIG. 3a, after S505, in S506, the kernel processing module puts a core device into dormancy, and then deactivates the primary-core CPU.

For example, an implementation principle of S506 is similar to that of step 16 and step 17 in Embodiment 1, and details are not described herein again.

After S506, an interrupt is suspended.

For example, in this case, an execution stage of the system enters the kernel mode, and no peripheral interrupt is triggered.

After S506, in S507, the kernel processing module prompts ATF (Arm Trusted Firmware, ARM trusted firmware) to put the system into dormancy.

For example, after the core device and the primary-core CPU are deactivated, the kernel processing module may notify, through a PSCI (power state coordination interface, power state coordination interface) interface, the ATF that the system enters a dormant state.

The system dormancy process in the instrument domain of the system in this application is completed in the foregoing process.

Implementation principles of related steps in the foregoing system dormancy process are similar to those of corresponding steps in Embodiment 1. Therefore, in this embodiment, same parts are not described in detail again. For details, refer to related descriptions of Embodiment 1, FIG. 2a, FIG. 2b, and FIG. 2c.

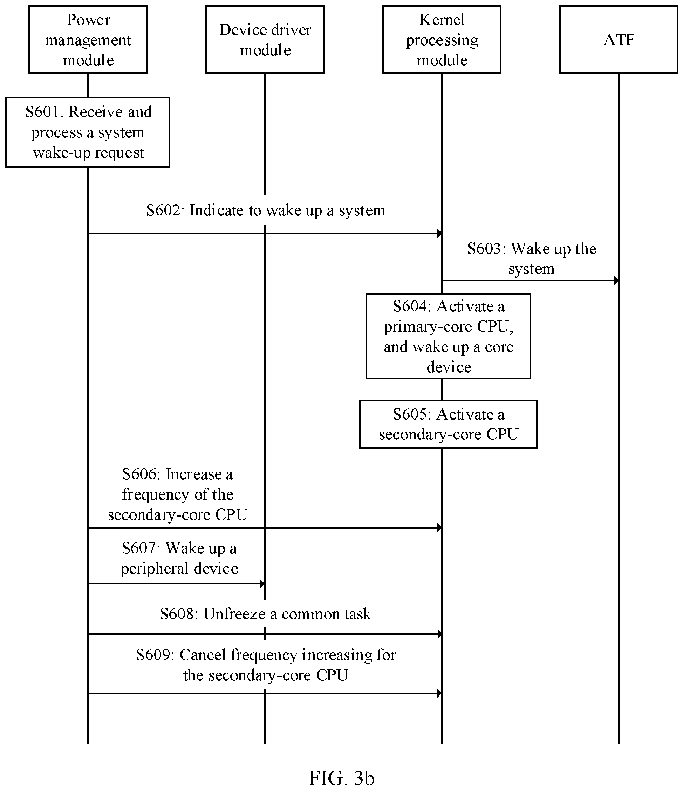

FIG. 3b is an example schematic diagram of a system wake-up process.

In FIG. 3b, an application scenario is a CDC of a motor vehicle. In this example, the CDC is divided into an instrument domain and an entertainment domain. The instrument domain is in a microkernel architecture (for example, the microkernel architecture shown in FIG. 2a). A system in this application may run on an embedded platform.

As shown in FIG. 3b, the system wake-up process may include the following steps.

S601: A power management module receives and processes a system wake-up request.

For example, the power management module may implement S601 by using a precise CPU frequency increasing mechanism with reference to an implementation process shown in FIG. 4a.

For example, as shown in FIG. 4a, a process of implementing the precise CPU frequency increasing mechanism by the power management module may include the following steps.

S101: A power management module receives a system wake-up request.

S102: The power management module determines whether the system wake-up request is a preset request.

For example, after a system of the CDC of the motor vehicle enters dormancy, a user presses an engine startup button of the motor vehicle. In this case, the power management module may receive a system wake-up request triggered by the user, to wake up an operating system of the motor vehicle. The system wake-up request herein is a preset wake-up request strongly related to user experience.

For example, after the system of the CDC of the motor vehicle enters dormancy, the system periodically sends a heartbeat instruction for waking up the system, to perform a related operation. The heartbeat instruction herein is not a preset wake-up request strongly related to user experience, because a user does not care about a speed of the wake-up process. In addition, the user is unaware of the wake-up process.

For example, the system wake-up request may be in a form of an event. In this case, the power management module may configure a second preset event indicating a preset wake-up request. When a triggered system wake-up event is the second preset event, S103 may be performed. When a triggered system wake-up event is not the second preset event, S104 may be performed.

S103: When detecting that the system wake-up request is a preset request, the power management module may determine that a target frequency to which a frequency of a CPU is to be increased is a maximum operating frequency.

For example, the preset request may include a preset wake-up request.

For example, after the system of the CDC of the motor vehicle enters dormancy, the user presses the engine startup button of the motor vehicle, and the user expects the system of the motor vehicle to operate as soon as possible. In this case, the power management module may determine a CPU whose frequency is to be increased and a target frequency to which the frequency of the CPU is to be increased. Herein, the target frequency is a maximum operating frequency of the CPU.

For example, a maximum operating frequency of each single-core CPU or each group of CPUs (including a multi-core CPU) may be configured on the power management module.

S104: When detecting that the system wake-up request is not a preset request, the power management module may determine that a target frequency to which a frequency of a CPU is to be increased is an operating frequency with an optimal energy efficiency ratio.

For example, after the system of the CDC of the motor vehicle enters dormancy, the system periodically sends a heartbeat instruction for waking up the system, to perform a related operation. In this case, the power management module may receive a system wake-up request (the heartbeat instruction herein) sent by the interrupt subsystem shown in FIG. 2c, to wake up the system of the motor vehicle. The power management module detects that the system wake-up request herein is not a preset wake-up request strongly related to user experience, and may determine a CPU whose frequency is to be increased and determine that a target frequency to which the frequency of the CPU is to be increased is an operating frequency with an optimal energy efficiency ratio for the CPU.

For example, an operating frequency with an optimal energy efficiency ratio for each CPU is strongly related to hardware of the CPU. The operating frequency with an optimal energy efficiency ratio for each CPU may be determined based on power consumption test data of a CPU of a specific chip platform at different operating frequencies.

Still as shown in FIG. 3b, after S601, in S602, the power management module prompts a kernel processing module to wake up the system.

After S602, in S603, the kernel processing module may prompt ATF to wake up the system.

For example, the kernel processing module may notify, through a PSCI interface, ATF that the system enters a running state.

After S603, in S604, the kernel processing module activates a primary-core CPU, and then wakes up a core device.

For example, an implementation principle of S604 is similar to that of step 22 and step 23 in Embodiment 2, and details are not described herein again.

After S604, in S605, the kernel processing module activates a secondary-core CPU.

For example, an implementation principle of S605 is similar to that of step 24 in Embodiment 2, and details are not described herein again.

After S605, in S606, the power management module increases a frequency of the secondary-core CPU through the kernel processing module.

For example, an implementation principle of S606 is similar to that of step 25 in Embodiment 2, and details are not described herein again.

After S606, in S607, the power management module wakes up a peripheral device through a device driver module.

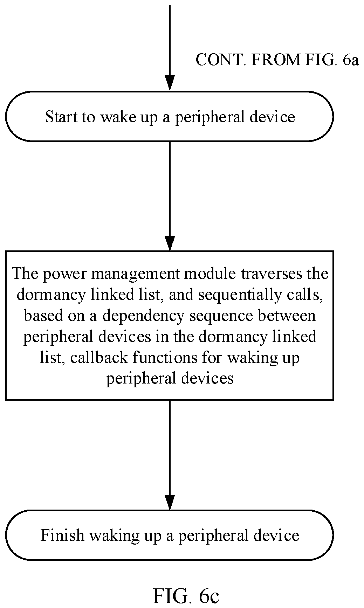

For example, FIG. 6a shows an example of an implementation process of a runtime dormancy and wake-up mechanism implemented by the power management module. The power management module may implement S607 through a process of waking up a peripheral device in FIG. 6c with reference to the runtime dormancy and wake-up mechanism implemented in FIG. 6a.

For related descriptions of FIG. 6a, refer to related descriptions of FIG. 6a in the system dormancy process. Details are not described herein again.

For example, when the power management module receives the system wake-up request and proceeds to the peripheral wake-up stage in the system wake-up process, as shown in FIG. 6c, when starting to wake up a peripheral device, the power management module may traverse a dormancy linked list, and sequentially call, based on a dependency sequence (namely, the sequence dependency relationship) between peripheral devices in the dormancy linked list, callback functions for waking up peripheral devices, to turn on a peripheral device in a shut-down state, so as to wake up the peripheral. Before the peripheral wake-up step in the system wake-up process is performed, wake-up processes of some peripherals have been completed during system operation. In this case, during peripheral wake-up in the system wake-up process, the power management module does not need to traverse a woken-up peripheral device or call a callback function for waking up the peripheral device, but only needs to call a corresponding callback function for waking up a peripheral device (for example, a peripheral device in a shut-down state) other than the woken-up peripheral device. This can greatly reduce a quantity of calls for callback functions for waking up peripherals, and a woken-up peripheral does not need to be traversed for a wake-up operation again, so that a peripheral wake-up speed can be increased.

Optionally, after the power management module calls a callback function for waking up a peripheral device to wake up the peripheral, the peripheral is in an awake state. In this case, a device identifier of the peripheral may be written into a wake-up linked list, or a device identifier of the peripheral may be transferred from the dormancy linked list to the wake-up linked list. This ensures integrity of data recorded in the dormancy linked list or the wake-up linked list.

In another implementation, a process of implementing the runtime dormancy and wake-up mechanism by the power management module may be partially different from the solution in FIG. 6a.

In this implementation, the power management module may generate a linked list 3 during initialization after power-on. For specific implementation details of an implementation in which the linked list 3 is used as an example, refer to corresponding descriptions in the system dormancy process, and details are not described herein again.

Therefore, in this implementation, for example, when the power management module receives the system wake-up request, proceeds to the peripheral wake-up stage in the system wake-up process, and starts to wake up a peripheral device, the power management module may traverse the example linked list 3 to determine at least one peripheral device in a dormant state, and sequentially call, based on a sequence dependency relationship corresponding to the at least one peripheral device, a callback function for waking up the at least one peripheral device, to turn on a peripheral device in a shut-down state, so as to wake up the peripheral. Before the peripheral wake-up step in the system wake-up process is performed, wake-up processes of some peripherals have been completed during system operation. In this case, during peripheral wake-up in the system wake-up process, the power management module does not need to traverse a woken-up peripheral device or call a callback function for waking up the peripheral device, but only needs to call a corresponding callback function for waking up a peripheral device that is not in a running state. This can greatly reduce a quantity of calls for callback functions for waking up peripherals, and no dormancy operation needs to be performed on a woken-up peripheral again, so that a peripheral wake-up speed can be increased.

Still as shown in FIG. 3b, after S607, in S608, the power management module unfreezes a common task through the kernel processing module.

For example, the power management module may send an unfreezing signal to a frozen common task. In this case, after receiving the unfreezing signal, the common task may send an unfreezing instruction to the kernel processing module, to unfreeze the common task, so that the frozen common task can continue to run, to enter a running state.

Optionally, after S608, in S609, the power management module cancels frequency increasing for the secondary-core CPU through the kernel processing module.

For example, details and a principle of implementation of step S609 are similar to those of step 28 in Embodiment 2, and details are not described herein again.

The system wake-up process in the instrument domain of the system in this application is completed in the foregoing process.

Implementation principles of related steps in the foregoing system wake-up process are similar to those of corresponding steps in Embodiment 2. Therefore, in this embodiment, same parts are not described in detail again. For details, refer to related descriptions of Embodiment 2, FIG. 2a, FIG. 2b, and FIG. 2c.

It should be noted that a data structure for storing data in embodiments of this application is not limited to the linked list in the foregoing embodiments, and may further include but is not limited to an array, a vector, an XML file, a variable, a key-value pair, a queue, a stack, a tree, a pile, a hash table, and the like.

It should be noted that, in embodiments of this application, "activating" an object may mean powering on the object. For example, activating a CPU means powering on the CPU. "Deactivating" an object may mean powering off the object. For example, powering off a CPU means powering off the CPU. Putting a device into dormancy may mean turning off the device or powering off the device, so that the device stops operation. Waking up a device may mean turning on the device or powering on the device, so that the device operates.

In a possible implementation, this application provides a system dormancy apparatus. The system dormancy apparatus includes: a filter module, configured to: in response to receiving a system dormancy request, filter out a first task in a blocked state; a freezing module, configured to freeze a filtered second task that is not in a blocked state; and a device dormancy module, configured to put a first device of a first type into dormancy based on device status information, where the device status information includes a device status of at least one device of the first type, the device status is information indicating whether the device is in a running state, the first device is different from a second device, and the second device is a device that is not in a running state in the at least one device.

In a possible implementation, the system dormancy apparatus further includes: a first frequency increasing module, configured to: when it is detected that the system dormancy request is a preset dormancy request, increase an operating frequency of a CPU to a first frequency, where the first frequency is a maximum operating frequency of the CPU.

In a possible implementation, the system dormancy apparatus further includes: a second frequency increasing module, configured to: when it is detected that the system dormancy request is not the preset dormancy request, increase the operating frequency of the CPU to a second frequency, where the second frequency is less than the first frequency, and the CPU achieves a highest energy efficiency ratio when the operating frequency of the CPU is the second frequency.

In a possible implementation, the filter module is specifically configured to filter out the first task in the blocked state from a task of a second type, where the task of the second type is a task other than a system task in an operating system.

In a possible implementation, the system dormancy apparatus further includes: a signal sending module, configured to send a freezing signal to the task of the second type, where the freezing signal indicates to freeze the task.

In a possible implementation, the system dormancy apparatus further includes: a storage module, configured to store, to a first data structure, a third task that is not in a frozen state in the second task; a traversal module, configured to cyclically traverse the third task in the first data structure, and detect a task status of the traversed third task; and a deletion module, configured to: when it is detected in the first data structure that the task status of the third task is the frozen state, delete the third task in the frozen state from the first data structure, where the traversal module is further configured to: when it is detected in the first data structure that the task status of the third task is not the frozen state, continue to cyclically traverse the first data structure until the first data structure is empty.

In a possible implementation, the CPU of the system is a multi-core CPU, the multi-core CPU includes a primary-core CPU and at least one secondary-core CPU, and the system dormancy apparatus further includes: a retention module, configured to: before a first secondary-core CPU is powered off, retain a timer and a task on the first secondary-core CPU without migrating the timer or the task to a second CPU, where the second CPU is a second secondary-core CPU or the primary-core CPU, and the at least one secondary-core CPU includes the first secondary-core CPU, or further includes the second secondary-core CPU.

In a possible implementation, the device dormancy module is specifically configured to: filter out the second device from devices of the first type based on the device status information, to determine the first device of the first type; and put the first device into dormancy.

In a possible implementation, the system dormancy apparatus further includes: a device status management module, configured to: when it is detected that a third device of the first type is in a running state during system operation, record or update a device status of the third device to a first state, to generate or update the device status information, where the first state is information indicating that the third device is in the running state; and when it is detected that a fourth device of the first type is not in a running state during system operation, record or update a device status of the fourth device to a second state, to generate or update the device status information, where the second state is information indicating that the fourth device is not in a running state, the device status is the first state or the second state, and the at least one device includes the third device and/or the fourth device.

In a possible implementation, the device status management module is further configured to: record or update, in the device status information, a device status of the first device to the second state.

Effect of the system dormancy apparatus in the foregoing implementations is similar to that of the system dormancy method in the foregoing implementations, and details are not described herein again.

In a possible implementation, this application provides a system wake-up apparatus. The system wake-up apparatus includes: a device wake-up module, configured to: in response to receiving a system wake-up request, wake up a first device of a first type based on device status information, where the device status information includes a device status of at least one device of the first type, the device status is information indicating whether the device is in a running state, the first device is different from a second device, and the second device is a device in a running state in the at least one device; and an unfreezing module, configured to unfreeze a first task in a frozen state, where the first task is not in a blocked state when the first task is frozen.

In a possible implementation, the system wake-up apparatus further includes: a first frequency increasing module, configured to: after a CPU is activated, when it is detected that the system wake-up request is a preset wake-up request, increase an operating frequency of the CPU to a first frequency, where the first frequency is a maximum operating frequency of the CPU.

In a possible implementation, the system wake-up apparatus further includes: a second frequency increasing module, configured to: after the CPU is activated, when it is detected that the system wake-up request is not the preset wake-up request, increase the operating frequency of the CPU to a second frequency, where the second frequency is less than the first frequency, and the CPU achieves a highest energy efficiency ratio when the operating frequency of the CPU is the second frequency.

In a possible implementation, the system wake-up apparatus further includes: a frequency increasing cancellation module, configured to restore a frequency adjustment policy for the CPU to an original frequency adjustment policy, where the original frequency adjustment policy is a frequency adjustment policy used for the CPU before the system wake-up request is received.

In a possible implementation, the first task is a task that is not in a blocked state in a task of a second type, and the task of the second type is a task other than a system task in an operating system.

In a possible implementation, the device wake-up module is specifically configured to: filter out the second device from devices of the first type based on the device status information, to determine the first device of the first type; and wake up the first device.

In a possible implementation, the system wake-up apparatus further includes: a device status management module, configured to: when it is detected that a third device of the first type is in a running state during system operation, record or update a device status of the third device to a first state, to generate or update the device status information, where the first state is information indicating that the third device is in the running state; and when it is detected that a fourth device of the first type is not in a running state during system operation, record or update a device status of the fourth device to a second state, to generate or update the device status information, where the second state is information indicating that the fourth device is not in a running state, the device status is the first state or the second state, and the at least one device includes the third device and/or the fourth device.

In a possible implementation, the device status management module is further configured to: record or update, in the device status information, a device status of the first device to the first state.

Effect of the system wake-up apparatus in the foregoing implementations is similar to that of the system wake-up method in the foregoing implementations, and details are not described herein again.

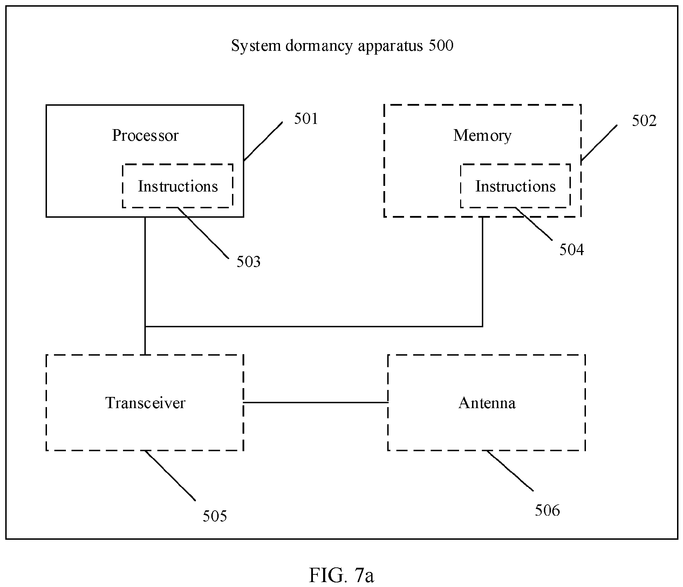

In a possible implementation, FIG. 7a is a schematic diagram of a structure of a system dormancy apparatus according to an embodiment of this application. As shown in FIG. 7a, the system dormancy apparatus 500 may include a processor 501 and a transceiver 505, and optionally, may further include a memory 502.

The transceiver 505 may be referred to as a transceiver unit, a transceiver device, a transceiver circuit, or the like, and is configured to implement a receiving function and a sending function. The transceiver 505 may include a receiver and a transmitter. The receiver may be referred to as a receiving device, a receiver circuit, or the like, and is configured to implement the receiving function. The transmitter may be referred to as a transmitting device, a transmitter circuit, or the like, and is configured to implement the sending function.

The memory 502 may store a computer program, software code, or instructions 504, where the computer program, the software code, or the instructions 504 may also be referred to as firmware. The processor 501 may control a MAC layer and a PHY layer by running a computer program, software code, or instructions 503 in the processor 501, or by calling the computer program, the software code, or the instructions 504 stored in the memory 502, to implement the system dormancy method provided in embodiments of this application. The processor 501 may be a central processing unit (central processing unit, CPU), and the memory 502 may be, for example, a read-only memory (read-only memory, ROM) or a random access memory (random access memory, RAM).

The processor 501 and the transceiver 505 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The system dormancy apparatus 500 may further include an antenna 506. The modules included in the system dormancy apparatus 500 are merely examples for description, and are not limited in this application.

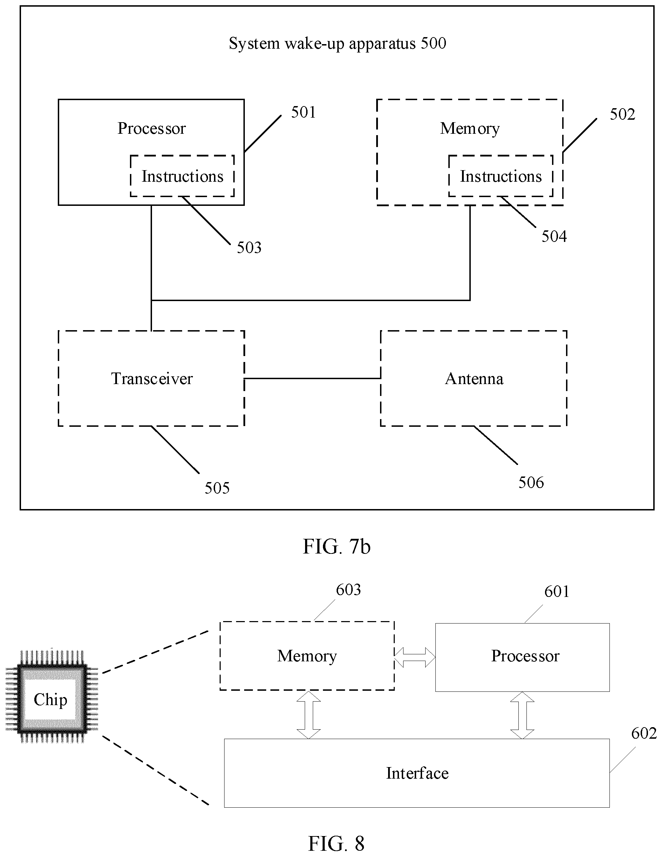

In another possible implementation, FIG. 7b is a schematic diagram of a structure of a system wake-up apparatus according to an embodiment of this application. As shown in FIG. 7b, the system wake-up apparatus 500 may include a processor 501 and a transceiver 505, and optionally, may further include a memory 502.

The transceiver 505 may be referred to as a transceiver unit, a transceiver device, a transceiver circuit, or the like, and is configured to implement a receiving function and a sending function. The transceiver 505 may include a receiver and a transmitter. The receiver may be referred to as a receiving device, a receiver circuit, or the like, and is configured to implement the receiving function. The transmitter may be referred to as a transmitting device, a transmitter circuit, or the like, and is configured to implement the sending function.

The memory 502 may store a computer program, software code, or instructions 504, where the computer program, the software code, or the instructions 504 may also be referred to as firmware. The processor 501 may control a MAC layer and a PHY layer by running a computer program, software code, or instructions 503 in the processor 501, or by calling the computer program, the software code, or the instructions 504 stored in the memory 502, to implement the system wake-up method provided in embodiments of this application. The processor 501 may be a central processing unit (central processing unit, CPU), and the memory 502 may be, for example, a read-only memory (read-only memory, ROM) or a random access memory (random access memory, RAM).

The processor 501 and the transceiver 505 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The system wake-up apparatus 500 may further include an antenna 506. The modules included in the system wake-up apparatus 500 are merely examples for description, and are not limited in this application.

A structure of the system dormancy apparatus may not be limited by FIG. 7a. A structure of the system wake-up apparatus may not be limited by FIG. 7b. The system dormancy apparatus or the system wake-up apparatus may be an independent device or a part of a larger device. For example, the system dormancy apparatus or the system wake-up apparatus may be implemented in the following forms:
(1) an independent integrated circuit IC, a chip, or a chip system or subsystem; (2) a set including one or more ICs, where optionally, the set of ICs may also include a storage component for storing data and instructions; (3) a module that can be embedded in another device; (4) a vehicle-mounted device or the like; or (5) others.

For a case in which the system dormancy apparatus or the system wake-up apparatus is implemented in a form of a chip or a chip system, refer to a schematic diagram of a structure of a chip shown in FIG. 8. The chip shown in FIG. 8 includes a processor 601 and an interface 602. There may be one or more processors 601, and there may be a plurality of interfaces 602. Optionally, the chip or the chip system may include a memory 603.

All related content of the steps included in the method embodiments may be cited in function descriptions of corresponding functional modules. Details are not described herein again.

Based on a same technical concept, an embodiment of this application further provides a computer-readable storage medium. The computer-readable storage medium stores a computer program. The computer program includes at least one segment of code. The at least one segment of code may be executed by a computer, to control the computer to implement the foregoing embodiment of the system dormancy method or the system wake-up method.

Based on a same technical concept, an embodiment of this application further provides a computer program. When the computer program is executed by a terminal device, the foregoing embodiment of the system dormancy method or the system wake-up method is implemented.

The program may be all or partially stored in a storage medium packaged with a processor, or may be all or partially stored in a memory not packaged with a processor.

Based on a same technical concept, an embodiment of this application further provides a chip, including a network interface controller and a processor. The network interface controller and the processor may implement the foregoing embodiment of the system dormancy method or the system wake-up method.

Methods or algorithm steps described with reference to content disclosed in embodiments of this application may be implemented by hardware, or may be implemented by a processor executing software instructions. The software instructions may include corresponding software modules. The software modules may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC.

A person skilled in the art should be aware that, in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium suitable for transmitting a computer program from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A system dormancy method, wherein the method comprises:
in response to receiving a system dormancy request, filtering out a first task in a blocked state;
freezing a filtered second task that is not in a blocked state; and
putting a first device of a first type into dormancy based on device status information, wherein
the device status information comprises a device status of at least one device of the first type, and the device status is information indicating whether the device is in a running state; and
the first device is different from a second device, and the second device is a device that is not in a running state in the at least one device.

2. The method according to claim 1, wherein before the filtering out a first task in a blocked state, the method further comprises:
when it is detected that the system dormancy request is a preset dormancy request, increasing an operating frequency of a CPU to a first frequency, wherein
the first frequency is a maximum operating frequency of the CPU.

3. The method according to claim 1 or 2, wherein before the filtering out a first task in a blocked state, the method further comprises:
when it is detected that the system dormancy request is not the preset dormancy request, increasing the operating frequency of the CPU to a second frequency, wherein
the second frequency is less than the first frequency, and the CPU achieves a highest energy efficiency ratio when the operating frequency of the CPU is the second frequency.

4. The method according to any one of claims 1 to 3, wherein the filtering out a first task in a blocked state comprises:
filtering out the first task in the blocked state from a task of a second type, wherein
the task of the second type is a task other than a system task in an operating system.

5. The method according to any one of claims 1 to 4, wherein after the filtering out a first task in a blocked state, and before the putting a first device of a first type into dormancy based on device status information, the method further comprises:
storing, to a first data structure, a third task that is not in a frozen state in the second task;
cyclically traversing the third task in the first data structure, and detecting a task status of the traversed third task; and
when it is detected in the first data structure that the task status of the third task is the frozen state, deleting the third task in the frozen state from the first data structure; or
when it is detected in the first data structure that the task status of the third task is not the frozen state, continuing to cyclically traverse the first data structure until the first data structure is empty.

6. The method according to any one of claims 1 to 5, wherein the putting a first device of a first type into dormancy based on device status information comprises:
filtering out the second device from devices of the first type based on the device status information, to determine the first device of the first type; and
putting the first device into dormancy.

7. A system wake-up method, wherein the method comprises:
in response to receiving a system wake-up request, waking up a first device of a first type based on device status information, wherein
the device status information comprises a device status of at least one device of the first type, and the device status is information indicating whether the device is in a running state; and
the first device is different from a second device, and the second device is a device in a running state in the at least one device; and
unfreezing a first task in a frozen state, wherein
the first task is not in a blocked state when the first task is frozen.

8. The method according to claim 7, wherein before the waking up a first device of a first type based on device status information, the method further comprises:
after a CPU is activated, when it is detected that the system wake-up request is a preset wake-up request, increasing an operating frequency of the CPU to a first frequency, wherein
the first frequency is a maximum operating frequency of the CPU.

9. The method according to claim 7 or 8, wherein before the waking up a first device of a first type based on device status information, the method further comprises:
after the CPU is activated, when it is detected that the system wake-up request is not the preset wake-up request, increasing the operating frequency of the CPU to a second frequency, wherein
the second frequency is less than the first frequency, and the CPU achieves a highest energy efficiency ratio when the operating frequency of the CPU is the second frequency.

10. The method according to any one of claims 7 to 9, wherein
the first task is a task that is not in a blocked state in a task of a second type, and the task of the second type is a task other than a system task in an operating system.

11. The method according to any one of claims 7 to 10, wherein the waking up a first device of a first type based on device status information comprises:
filtering out the second device from devices of the first type based on the device status information, to determine the first device of the first type; and
waking up the first device.

12. A system dormancy apparatus, comprising:
a filter module, configured to: in response to receiving a system dormancy request, filter out a first task in a blocked state;
a freezing module, configured to freeze a filtered second task that is not in a blocked state; and
a device dormancy module, configured to put a first device of a first type into dormancy based on device status information, wherein
the device status information comprises a device status of at least one device of the first type, and the device status is information indicating whether the device is in a running state; and
the first device is different from a second device, and the second device is a device that is not in a running state in the at least one device.

13. The apparatus according to claim 12, wherein the apparatus further comprises:
a first frequency increasing module, configured to: when it is detected that the system dormancy request is a preset dormancy request, increase an operating frequency of a CPU to a first frequency, wherein
the first frequency is a maximum operating frequency of the CPU.

14. The apparatus according to claim 12 or 13, wherein the apparatus further comprises:
a second frequency increasing module, configured to: when it is detected that the system dormancy request is not the preset dormancy request, increase the operating frequency of the CPU to a second frequency, wherein
the second frequency is less than the first frequency, and the CPU achieves a highest energy efficiency ratio when the operating frequency of the CPU is the second frequency.

15. The apparatus according to any one of claims 12 to 14, wherein
the filter module is specifically configured to filter out the first task in the blocked state from a task of a second type, wherein
the task of the second type is a task other than a system task in an operating system.

16. A system wake-up apparatus, wherein the apparatus comprises:
a device wake-up module, configured to: in response to receiving a system wake-up request, wake up a first device of a first type based on device status information, wherein
the device status information comprises a device status of at least one device of the first type, and the device status is information indicating whether the device is in a running state; and
the first device is different from a second device, and the second device is a device in a running state in the at least one device; and
an unfreezing module, configured to unfreeze a first task in a frozen state, wherein
the first task is not in a blocked state when the first task is frozen.

17. The apparatus according to claim 16, wherein the apparatus further comprises:
a first frequency increasing module, configured to: after a CPU is activated, when it is detected that the system wake-up request is a preset wake-up request, increase an operating frequency of the CPU to a first frequency, wherein
the first frequency is a maximum operating frequency of the CPU.

18. The apparatus according to claim 16 or 17, wherein the apparatus further comprises:
a second frequency increasing module, configured to: after the CPU is activated, when it is detected that the system wake-up request is not the preset wake-up request, increase the operating frequency of the CPU to a second frequency, wherein
the second frequency is less than the first frequency, and the CPU achieves a highest energy efficiency ratio when the operating frequency of the CPU is the second frequency.

19. The apparatus according to any one of claims 16 to 18, wherein
the first task is a task that is not in a blocked state in a task of a second type, and the task of the second type is a task other than a system task in an operating system.

20. A computer-readable storage medium, comprising a computer program, wherein when the computer program runs on a computer or a processor, the computer or the processor is enabled to perform the method according to any one of claims 1 to 6 or claims 7 to 11.

21. A system dormancy apparatus, comprising one or more interface circuits and one or more processors, wherein the interface circuit is configured to receive a signal from a memory, and send the signal to the processor, the signal comprises computer instructions stored in the memory, and when the processor executes the computer instructions, the processor is configured to perform the method according to any one of claims 1 to 6.

22. A system wake-up apparatus, comprising one or more interface circuits and one or more processors, wherein the interface circuit is configured to receive a signal from a memory and send the signal to the processor, the signal comprises computer instructions stored in the memory, and when the processor executes the computer instructions, the processor is configured to perform the method according to any one of claims 7 to 11.

23. A computer program product, wherein the computer program product comprises a software program, and when the software program is executed by a computer or a processor, the steps of the method according to any one of claims 1 to 6 or claims 7 to 11 are performed.
